(19) Europäisches Patentamt
European Patent Office
Office européen des brevets

(11) **EP 4 540 646 B1**

(12) **EUROPEAN PATENT SPECIFICATION**

(45) Date of publication and mention
of the grant of the patent:
**29.10.2025 Bulletin 2025/44**

(21) Application number: **23730817.6**

(22) Date of filing: **05.06.2023**

(51) International Patent Classification (IPC):
*G02B 27/01* *(2006.01)*

(52) Cooperative Patent Classification (CPC):
**G02B 27/0172; G02B 2027/0178**

(86) International application number:
**PCT/EP2023/065021**

(87) International publication number:
**WO 2023/241985 (21.12.2023 Gazette 2023/51)**

(54) **DISPLAY APPARATUS**

ANZEIGEGERÄT

APPAREIL D'AFFICHAGE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **15.06.2022 GB 202208752**

(43) Date of publication of application:
**23.04.2025 Bulletin 2025/17**

(60) Divisional application:
**25203485.5**

(73) Proprietor: **University Of Southampton
Southampton, Hampshire SO17 1BJ (GB)**

(72) Inventor: **SMITH, Peter George Robin
Hampshire SO17 1BJ (GB)**

(74) Representative: **Haines, Miles John L.S.
Haines IP Limited
12 Byron Close
Bishop's Waltham, Southampton SO32 1RS (GB)**

(56) References cited:
US-A- 5 802 222        US-A1- 2002 018 036
US-A1- 2007 291 810    US-B1- 7 489 437

**Description**

**BACKGROUND OF THE INVENTION**

Augmented reality (AR) and virtual reality (VR) displays have been incorporated into a variety of wearable formats including headsets. For AR headsets a glasses (i.e. spectacles) format is common. For VR headsets, a ski goggles format is common. A recent review article on AR and VR display technologies is the paper by Zhan, Yin, Xiong, He and Wu "Augmented Reality and Virtual Reality Displays: Perspectives and Challenges" Perspective, Vol. 23, Issue 8, 101397 (2020) at https://doi.org/10.1016/j.isci.2020.101397.

In AR, an image of a synthetic scene is superimposed on a natural scene that is simultaneously viewed by the viewer. AR spectacle lenses lie at a vertex distance of about 12-15 mm, which is much closer than the eye's near point, which is gradually increases with age from about 7 cm for a youth to over 50 cm for an old person. (The eye's near point is the closest distance which the eye can bring into focus.) In AR, the synthetic scene is therefore be represented by a virtual image arranged further away from the eye than the AR spectacle lenses. VR image formation is simpler than AR, since there is no natural scene and only a synthetic scene is generated.

For an AR headset in spectacles format, the most common technology approach at present is to use a microprojector system. A virtual image reproducing a synthetic scene is routed onto one or both of the spectacle lenses. (We use the term 'lens' for linguistic convenience but it will be understood that the lenses may be blanks, i.e. have no focusing effect in the sense of normal vision correction for long or short sightedness etc.) The lenses of the AR spectacles are used as a medium to route the light representing the synthetic scene into the path of the natural scene light via suitable beam combiners. AR beam combiners can be subclassified into reflective (e.g. a mirror or prism) or diffractive (i.e. some kind of grating). The virtual image of the synthetic scene should give the impression of portraying one or more objects at the correct location in the natural scene, which means not only at the correct position (essentially angle) in the visual field but preferably also at the correct distance from the eye.

There are some problems with one or more of the existing AR and VR display technologies.

One problem is how to avoid unwanted light scattering on the spectacle lenses caused by the projected beams, which detracts from the appearance of the scene and results in the AR spectacles not giving the impression of being fully transparent. For example, since spectacle lenses are placed around 12-15 mm from the eyeball and since this distance is similar to the focal length of the eye, any unwanted light scattering from the spectacles becomes collimated by the eye and spreads widely across the retina. In bright ambient light conditions, such scattering is perceived as glare. In low ambient light conditions, such scattering can be much brighter than the light from the natural scene and hence severely impair vision. Light scatter artefacts, such as rainbow effects, are a particularly acute problem when a grating-based beam combiner is used.

Another problem, which is relevant for both AR and VR, is how to avoid vergence-accommodation conflict, which is a characteristic of binocular vision where the normal relationship between accommodation and vergence that exists when viewing a natural scene is broken by the rendering of the synthetic scene, resulting in headaches and nausea. A vergence-accommodation conflict arises when an object in a synthetic scene is perceived to be arranged at one distance (and the vergence locks to that distance) whereas the light representing that object originates from a different distance (and accommodation locks to that distance). Even in monocular vision the brain has an accommodation expectation based on the brain's understanding of the juxtaposition of objects in a familiar scene, so that headaches and nausea can also arise from monocular vision of a synthetic scene that causes the eye to accommodate at a certain distance when viewing an object, where the distance is different from the brain's expectation of the object's distance.

US2007291810A1 discloses a monolithic device incorporating red, green, and blue laser light sources which can be used as a source for a colour microprojector system in which the laser beams are rastered over a display panel to form the colour image. Each of the three colours is produced by sum frequency mixing of two laser beams. Red light is generated by mixing 1064 nm laser light and 1530 nm laser light. Green light is generated by mixing two 1064 nm laser beams. Blue light is generated by mixing two 914 nm laser beams.

**SUMMARY OF THE INVENTION**

This invention proposes a display apparatus based on a display panel which hosts phase-matched nonlinear mixing of pairs of input beams that cross in the display panel in a noncollinear geometry. The crossing takes place in a region of nonlinear optical (NLO) material within the display panel. Each crossing input beam pair produces a product beam by sum frequency generation (SFG), or other nonlinear mixing process in the NLO material.

Display apparatus according to this design can be provided for close-to-eye image formation; both for AR and VR. Display apparatus according to this design can also be provided for large format displays such as large screens for video conferencing or television.

According to one aspect of the invention, there is provided a display apparatus for displaying synthetic scene images responsive to input of image information, the display apparatus comprising:

a first beam source for providing a first input beam of a first frequency and bandwidth;
a second beam source for providing a second input beam of a second frequency and bandwidth;
a display panel containing NLO material that is phase matched to the first and second input beams and to a product beam of a sum frequency that is equal to the sum of the first and second frequencies;
input beam routing components arranged to introduce the first and second input beams into the display panel so that they traverse the display panel in first and second paths that cross each other in the NLO material in a noncollinear geometry to define an intersection volume where the product beam is generated by sum frequency generation; and
a controller operable responsive to the input of the image information to form the synthetic scene images by amplitude modulating at least one of the first and second input beams and by phase modulating at least one of the first and second input beams to set each of amplitude, wavevector and wavefront radius of curvature of the product beam.

In some embodiments, the first input beam encodes image intensity information that defines the intensity of the product beam generated at each intersection volume of a given synthetic scene image and the second input beam encodes image depth information that defines the wavefront radius of curvature in the product beam generated at all intersection volumes for a given synthetic scene image. This is a convenient arrangement for allowing each synthetic scene image that is formed to be associated with a different perceived depth through setting its wavefront radius of curvature. Specifically, when the second input beam has a substantially planar wavefront, by which is meant a wavefront radius of curvature of greater than 5 metres, the synthetic scene image is formed at a distance perceived to be infinite, whereas when the second input beam has a wavefront radius of curvature of less than 5 metres, the synthetic scene image is formed at a distance perceived to be finite. It is thus possible to form several synthetic scene images in quick succession to build up different layers of scenery in an image frame, e.g. a background at infinity and one or more closer layers on which specific image elements are represented.

In some embodiments, the controller is operable to group the synthetic scene images into image frames, the different synthetic scene images of a given image frame having different wavefront radii of curvature to represent image elements that lie at different respective perceived distances.

In other embodiments, the display apparatus is for displaying a synthetic scene image in colour and comprises a plurality of beam sources which includes the first and second input beam sources, wherein the first and second input beams form one of three input beam pairs generated by the plurality of beam sources, the first to third input beam pairs combining to generate first to third product beams with first to third sum frequencies which provide first to third primary colours. In such embodiments, the plurality of beam sources to form the three input beam pairs may comprise an emitter array and first to third lasers, wherein the emitter array provides one of the input beams for all three input beam pairs, the other input beam of each pair being provided by one of the first to third lasers, the first to third primary colours being provided by time slicing so that the first to third product beams are generated sequentially. In particular, the emitter array may be driven to amplitude modulate the input beam which it generates. For example, the NLO material may comprise first to third spatially modulated regions to provide quasi-phase matching for the first to third input beam pairs respectively. One option here is when the first to third spatially modulated regions are formed in the NLO material at first to third depth portions in the display panel. Another option here is when the first to third spatially modulated regions are formed in the NLO material as an array of spot clusters, each spot cluster comprising adjacent spots of each of the first to third spatially modulated regions.

For colour display in some embodiments, the controller may be operable to group the synthetic scene images into image frames, the different synthetic scene images of a given image frame being in each of the first to third primary colours.

For colour display in some embodiments, the controller may be operable to group the synthetic scene images into image frames, the different synthetic scene images of a given image frame being in each of the first to third primary colours and having different wavefront radii of curvature, thereby to represent colour image elements that lie at different respective perceived distances.

In some embodiments, the input beam routing components are adjustable to provide for variation of at least one of the first and second paths to vary the angle at which the first and second input beams cross in the NLO material and thereby vary the wavevector direction of the product beam.

In some embodiments, the input beam routing components are adjustable to provide for variation of at least one of the first and second paths to vary the location where the first and second paths cross in the NLO material.

In some embodiments, the display apparatus further comprises an amplitude modulator arranged to amplitude modulate the first input beam and a phase modulator arranged to phase modulate the second input beam. In other embodiments, the display apparatus further comprises a combined amplitude and phase modulator to amplitude and phase modulate one of the first and second input beams.

In some embodiments, the NLO material is spatially modulated in respect of its second order nonlinearity to provide phase matching through quasi-phase matching. In other embodiments, the NLO material is homogeneous in respect of its second order nonlinearity to provide phase matching through birefringent phase matching.

Regarding the first and second frequencies and their sum frequency: The sum frequency is preferably in the visible range, i.e. ca. 790-405 THz / 380-740 nm. The first and second frequencies are in the infrared range, i.e. ca. 400-150 THz / 750 nm to 2 $\mu$m. The ratio of the first and second frequencies is between 0.5 and 2.0.

For AR, the display panel, including the NLO material, is made transparent across the visible range, i.e. ca. 790-405 THz / 380-740 nm, so that natural scene light can pass through to the eyes of the viewer.

In some embodiments, the display panel has a peripheral region containing a material that is absorbent to light at the first and second frequencies so that the first and second input beams are absorbed after the first and second paths have crossed each other in the NLO material when they reach the peripheral region.

In some embodiments, the display apparatus further comprises one or more light sensors arranged outside the display panel to detect for abnormal leakage of input beam light out of the display panel indicative of structural damage of the display panel.

The NLO material may be contained in the display panel in a NLO material layer. In one specific implementation, the display panel comprises a front filter layer arranged in front of the NLO material layer, the front filter layer being opaque to the first and second frequencies and transparent to the sum frequency, to block emission of light from the first and second input beams out of the display panel in an outward direction. In another specific implementation, the display panel comprises a back filter layer arranged to the back of the NLO material layer, the back filter layer being opaque to the first and second frequencies, to block emission of light from the first and second input beams out of the display panel in an inward direction. The back filter layer may be transparent to visible frequencies. One option is for the NLO material to be distributed across the NLO material layer continuously such that phase matching and hence product beam generation can occur at any location in the NLO material layer. Another option is for the NLO material to be distributed across the NLO material layer as an array of spots such that phase matching and hence product beam generation is confined to the locations of those spots.

In some embodiments, the display panel comprises a light blocking layer comprising an array of pixels which are individually addressable by electric control lines in order to switch the pixels between a first state which is opaque to visible frequencies and a second state which is transmissive to visible frequencies, so that natural scene light can be blended out of selected areas of the light blocking layer.

In some embodiments, the first and second paths traverse the display panel by successive reflections. The successive reflections may be from front and back surfaces of the display panel by total internal reflection. Alternatively, the successive reflections may be from front and back mirror layers arranged in the display panel that are respectively disposed to the front and back of the NLO material. Specifically, the front and back mirror layers may be reflective at the frequencies of the input beams and transmissive across visible frequencies.

In some embodiments, the NLO material is transparent across the visible.

In some embodiments, the first and second frequencies are different. In other embodiments, the first and second frequencies are equal so that the sum frequency generation is second harmonic generation. When the first and second frequencies are equal, the first and second input beam sources can be one and the same beam source and the first and second input beams are both derived from that beam source.

The above-specified display apparatus may be incorporated into a wearable headset such that the display panel is arranged in front of a wearer's eyes at a vertex distance of less than 30 mm for close-to-eye image formation.

Assuming SFG is the nonlinear process that is exploited and also assuming the product beams are to be formed at visible wavelengths/frequencies (ca. 380-740 nm / 790-405 THz) to create a synthetic scene image that is visible to the human eye, the input beams of each pair will both lie in the infrared (e.g. 750 nm to 2 $\mu$m / 400-150 THz), at least provided that they are not too dissimilar in wavelength/frequency (e.g. have a ratio of less than 2:1).

As an alternative nonlinear mixing process of SFG, three photon summative mixing could be provided by a combination of collinear mixing second harmonic generation (SHG) in one of the input beams and noncollinear mixing of the second harmonic with the other input beam of the pair.

The phase matching in the NLO material may occur without structuring the material, e.g. by using a sufficiently thin layer of NLO material with a high birefringence. However, the use of quasi-phase matching (QPM) will be convenient in many embodiments. To achieve QPM, the NLO material is structured to spatially modulate its nonlinear properties. Most commonly periodic poling is used to create a grating structure characterised by a single periodicity and alternating signs of the second order nonlinearity $\chi(2)$.

The two input beams of a pair are directed to traverse the NLO material at angles which ensure that the wavevector of the product beam has a direction that propagates into the viewer's eye, i.e. through the pupil.

The noncollinear mixing of first and second input beams in the NLO material allows a product beam to be generated whose properties are controlled in amplitude (i.e. image brightness), in wavevector (i.e. to direct the generated light towards the pupil), in wavefront curvature (i.e. to control perceived distance of the image) and image element location in the visual field (i.e. position on the NLO material).

To create a realistic impression of binocular vision, it is possible to exploit the ability to control the wavevector direction and image element location in order to present slightly different images of the same synthetic object to the left and right eyes of a viewer, e.g. on each lens of a pair of AR spectacles, so that the natural vergence and the associated perception of depth (stereopsis) for the synthetic object is provided for. For synthetic objects that are close enough for monocular vision depth perception (i.e. less than about 4-5 metres), the vergence simulation can be combined with setting the wavefront curvature of the synthetic object so that the focus of the eye (accommodation) is matched exactly or at least approximately to the same distance as associated with the vergence, thereby avoiding vergence-accommodation conflict. For synthetic objects at greater distances, a planar wavefront can be used.

The nonlinear process creates an oscillating polarisation at the frequency of the product beam, i.e. in the visible. This process is inherently a wave-mixing phenomenon, which means that the product beam has transverse (i.e. spatial) coherence with a defined phase relationship between different parts of the emitted wave. The product beam thus creates a wavefront which has a specific curvature. This is fundamental property not possessed by light generated by pixel emitters in a conventional microdisplay as used in current VR headsets, or point emitters as used in current AR spectacles. Rather, the product beam generated by the noncollinear mixing of the pair of input beams in the NLO material has properties that are more associated with a conventional diffractive optics approach which also emits a wavefront through diffraction. A transversely coherent approach to generating the light for the synthetic scene image is what allows the radius of curvature of the wavefront to be set, thereby allowing the synthetic scene image to be placed at a certain distance which can be varied by varying the radius of curvature of one of the input beam's wavefront. A natural depth perception can therefore be impressed on the synthetic scene image. Different synthetic objects can be given different depth appearances so they appear at appropriate depths relative to each other and, in the case of AR, in relation to objects in the natural scene. This not only contributes to the perceived realism of the synthetic scene image but also allows convergence-accommodation conflicts to be avoided.

A display apparatus can be provided that is able to direct light for the synthetic scene image into the eye from across a wide range of angles (i.e. from a large range of positions across the visual field). This property is beneficial, since it takes account of the large angular swivel range of the eye. This property is also beneficial, since it allows creation of a synthetic scene image that appears to emanate from an appropriate position within the visual field when the eye is pointing in a certain direction. Moreover, as mentioned above, the product beam light that forms the synthetic scene image can be emitted from the display panel with a defined radius of curvature so the different parts of the synthetic scene image can be placed in the synthetic scene at appropriate perceived distances.

For an AR headset, the display panel can be realized in a lens format. In a traditional spectacles format, in which a pair of lenses are set in a frame for the left and right eyes, there will be a physically separate display panel for each lens. In a ski goggles format with a single lens sheet, a single display panel could be used. For AR, the NLO material in the display panel is preferably transparent (in the visible) so that it can be incorporated into the display panel without reducing the transmission of light travelling from the natural scene, through the display panel into the eye. An AR display panel can thus be provided that appears truly transparent to the viewer, not only since the NLO material is itself transparent but also since the wavelengths of the input beams are outside the visible range (or at least can be easily chosen to be). Not only is the light from the input beams invisible to the human eye but more importantly it is easy to prevent input beam light at non-visible frequencies/wavelengths from entering the viewer's eye by arranging a layer of a suitable filter material (e.g. as a bandpass or edge filter) between the NLO material layer and the viewer's eye. The filter material is chosen to be opaque to the input beam wavelengths and transparent across the visible range of wavelengths. For an AR headset, it is also possible to adjust the brightness of objects in the synthetic scene image. This may be done simply by adjusting the intensity of one or both of the input beams of a beam pair. For a VR headset, the NLO material need not be transparent (in the visible), i.e. could be opaque (in the visible).

A display panel according to the invention can be thought of as a transparent microdisplay in the sense that, like a microdisplay, the visible light is created in localised regions capable of creating wavefronts across the display (the crossing input beam intersection volumes). Because of the feature of the invention whereby the only visible light is that generated for the image, problems associated with stray light and scattering in conventional microprojection systems for AR (or VR) do not arise. Instead of having visible beams traversing the lens to form the image in the visual field of the eye, we have infrared beams, i.e. input beams that are at wavelengths outside the visible range and which can in any case be prevented from entering the eye by arranging a suitable filter layer between the eye and the NLO material layer. Consequently, there is no glare and no bright scattering artefacts to disturb night-time vision. A display apparatus can therefore be realised that in terms of its light generation is analogous to a microdisplay VR display apparatus but unlike a microdisplay is transparent (in the visible) so that it can be used for AR.

Colour Displays

The above discussion of the invention has been confined to considering the generation of a single product beam from a single pair of input beams. This can be thought of in terms of describing a monochrome display or alternatively one of three colour components of a colour display. For a colour display, three product beams are needed, one for each of the three primary colours, so there will be three pairs of input beams.

For colour display, the display apparatus may comprise:

a plurality of beam sources with respective frequencies and bandwidths to provide first to third input beam pairs of two input beams, each input beam pair having a pair of frequencies that sum to first to third primary colour frequencies;

a display panel containing NLO material that is phase matched to the first to third pairs of input beams and to first to third product beams at first to third primary colour frequencies which are equal to the sum of the frequencies of the first to third pairs of input beams;

input beam routing components arranged to introduce the two input beams of each input beam pair into the display panel so that the input beams of each pair traverse the display panel in first and second paths that cross each other in the NLO material in a noncollinear geometry to define an intersection volume where the product beam for that input beam pair is generated by sum frequency generation;

an amplitude modulator operable to amplitude modulate at least one beam of each input beam pair;

a phase modulator operable to phase modulate at least one beam of each input beam pair; and

a controller operable to form colour image frames, each image frame comprising first to third synthetic scene images generated by the first to third input beam pairs respectively, wherein the controller is operable to form each of the first to third synthetic scene images by controlling the amplitude and phase modulators responsive to the input of the image information to set product beam amplitude, product beam wavevector and product beam wavefront radius of curvature.

For colour display, the plurality of beam sources may comprise an emitter array and first to third lasers, wherein the emitter array provides one of the input beams for all three input beam pairs, the other input beam of each pair being provided by one of the first to third lasers, the first to third primary colours being provided by time slicing so that the first to third product beams are generated sequentially.

While the need to have three pairs of input beams implies there will be six input beams in total, this does not equate to a need to have six independently generated input beams. Firstly, the same wavelength can be shared between different input beam pairs, so the total number of wavelengths needed to form three pairs need not be as high as six but rather can be reduced to five, four or three, with three being the minimum possible number. Secondly, time slicing (i.e. multiplexing) can be used so that a common first input beam is used to generate all three colours in combination with dedicated second input beams, one for each colour, thereby reducing the total number of independently generated input beams that is required to four.

For colour display, if QPM is used, the NLO material can be structured with a single grating period that is used for all three colours. The lack of exact phase matching that will exist for at least two of the three colours can be tolerated and, if needed or desired, compensated for by changing the overall intensity of one or both of the input beams of each beam pair. The angles at which the input beams traverse the QPM NLO material can also be selected to be different for the different colours, so that exact phase matching (or at least closer to exact phase matching) is provided for all three beam pairs (i.e. all three colours). Alternatively, to provide quasi-phase matching, the NLO material can be periodically poled (or equivalently orientation patterned in the case of nonbirefringent materials) with three different periods so there are three regions of QPM NLO material with different grating periods, each period being optimized for one of the three colours. Another alternative is to create a single synthesised QPM structure with three phase matching peaks optimised for the desired three colours of the display. The three colour-specific QPM regions can be distributed in the image generation plane, e.g. across the display panel, in a regular or irregular 2D array of spot clusters, where each spot cluster contains three laterally adjacent colour-specific QPM regions, i.e. spots. The spots in each cluster are so close together that the fact they are not at the same position in the visual field will be imperceptible. Alternatively, the three colour-specific QPM regions can be distributed along an axis perpendicular to the image generation plane, e.g. over three different depth portions of the display panel. Here the colour-specific QPM regions could, like the above-described clusters, be arranged in a 2D array or could be continuous areas across the display panel as needed to cover the required visual field for synthetic scene image formation.

In the following, we mainly describe the invention in terms of generating a single product beam, i.e. in terms of generating a monochrome image or one colour component of a colour image. Nevertheless, it will be understood that a colour image can be generated from three such product beams from three pairs of input beams.

## Image Information for Close-to-Eye Synthetic scene image Formation

To create a convincing virtual image of a synthetic scene in an image generation plane close to the eye, as is needed for AR spectacles in particular, it is necessary to accurately reproduce the image location information that would be encoded in light from an equivalent natural scene. The image location information is a subset of the overall image information and is what defines the perception of 3D placement of an object in a scene. As discussed in more detail below, for monocular vision, the image location information in a natural scene is essentially a combination of where the light from different parts of the natural scene appear in the visual field (i.e. the light's input angle into the eye) and the radius of curvature possessed by the light wave from each point in the natural scene when it reaches the eye. For close objects, the wavefront curvature is appreciable whereas for distant objects there is no appreciable curvature, i.e. the wavefront is effectively a plane wave. For synthetic scene image formation in a display panel that is close to the eye (e.g. at the vertex distance, which is ca. 12-15 mm, where a spectacle lens is typically situated), the input angle and radius of curvature information from a natural scene can be mimicked by generating light at a particular location on the image generation plane (so it appears in the correct point in the visual field) and with a particular direction of light propagation from that location (so the light generated at that location in the image generation plane enters the eye). As well as carrying the correct image location information, the light generated on the image generation plane must also have the correct intensity and, for a colour image, the correct colour.

In the context of the present invention, correctly encoding the image location information for the synthetic virtual image involves generating the product beam light in the NLO material at the correct locations (visual field angles), with the correct wavevector directions and with the correct radii of wavefront curvature. To generate the image, the image intensity information must of course also be reproduced, which can be done in a straightforward manner through appropriate amplitude modulation of one or both of the first and second input beams. For colour images, the image colour information also needs to be reproduced, which is done by producing three product beams of three primary colours (e.g. RGB) in the QPM NLO material at each location in the visual field, i.e. to provide an appropriate colour gamut in the same way as for any colour projection system.

To give a convincing binocular vision perception of the synthetic scene, the respective images formed for each of the left eye and right eye will correspond but will not be the same. In particular, for the left and right eyes, light from the same point in the synthetic scene is formed at different locations in the monocular visual fields of each eye and with a different wavevector direction, thereby to mimic the natural vergence and the associated perception of depth (stereopsis). It will be appreciated that, for any parts of the synthetic scene that can be ascribed infinite distance, the images formed for each of the left eye and right eye can be made the same, since in the equivalent natural scene light from distant objects will arrive at both the left eye and the right eye as plane waves and at the same location in the respective monocular visual fields of the left eye and right eye. Although it should be realised that in creating a realistic visual scene any intermediate distance objects can block or occlude differently between the left and right eye scenes, so although both are plane wave, they emanate from different direction to the two eyes.

## Image Formation of the Synthetic Scene

We disclose two basic approaches for forming a synthetic virtual image in an image generation plane close to the eye. The first is a scanning approach to build up each image frame pixel-by-pixel, e.g. by rastering. The second forms a whole image frame simultaneously.

Image Formation in Angular Space (Input Beam Scanning / Retinal Scanning): First and second input beams are moved in both angle and position in respect of their traversal of the NLO region to create a product beam that is scanned across the monocular visual field of the viewer to form an image encoded in angular space with a retinal scan approach. An image frame is thus built up by rapidly scanning the visible light over the retina. In more detail, first and second input beams are provided which have respective beam cross-sections that are dimensioned so that where the first and second input beams cross in the NLO region their intersection volume is small to provide a plane wave that is not diffractively limited and which maps onto a point on the retina (through eye focusing), so the intersection volume at any location in the image generation plane corresponds to angular field single emission (as a wavefront) for building up the synthetic virtual image on the eye. For each intersection volume, the first and second angles at which the first and second input beams traverse the NLO region define the wavevector direction of the product beam. The wavevector direction is set to ensure that the product beam is directed to the pupil of the eye. To build up a whole image (for one eye), one or both of the first and second input beams are altered in angle, so that while the input beam intersection volume, i.e. where the product beam is generated, stays essentially constant the angle of the nonlinear generated light changes to a different angular position in the (monocular) visual field of the viewer's eye. At the same, the intensity of the product beam is varied to reproduce the image intensity information, which can be done by amplitude modulation of the first and/or second input beams, preferably also taking account of any variation in conversion efficiency of the nonlinear mixing as a result of the input beam traversal angles changing as the intersection angles alter over the image generation plane, so that over time a complete image frame is built up. As the input angles into the intersection volume are altered, the wavevector direction is also altered to ensure that the product beam remains directed to the pupil of the eye at all times. This can be done by appropriate adjustment of the angles at which the first and second input beams traverse the NLO material. The scanning of the intersection volume across the monocular visual field to build up each image frame may, for example, follow a line-by-line raster pattern. The raster may involve a back-and-forth movement meandering from left-to-right, then right-to-left etc. in a serpentine.

Whole Image Formation (upconversion analogy): This approach to image formation can be partially understood by analogy to a conventional up-conversion imaging system. A first input beam (e.g. at 1064 nm) contains the image intensity information and a second input beam (e.g. at 1550 nm) crosses with the first input beam in the NLO material to cause an upconverted version of the first input beam to be reproduced (as the product beam). This analogy is helpful but not complete, since it does not take account of the fact that the noncollinear phase matching according to the invention also allows control of the wavefront curvature of the product beam so that image depth information is incorporated into the synthetic virtual image. The image depth information is thus "added" to the "upconverted version" of the intensity modulated first input beam (i.e. the product beam) by phase modulation of the second input beam. This wavefront engineering feature of the present invention has no analogue in a conventional up-conversion imaging system.

In one embodiment of the invention, there is a implementation example which is closest to the up-conversion imaging analogue. The first input beam is amplitude modulated across its beam cross-section to carry the image *intensity* information that defines the intersection-volume-specific brightness in the product beam. The second input beam is phase modulated across its beam cross-section to carry image depth information that defines the intersection-volume-specific wavefront curvature in the product beam. In other implementation examples, which move further away from the up-conversion imaging analogue, both amplitude and phase are modulated in one or both of the first and second input beams across their beam cross-sections. For example, the first beam may be amplitude modulated and the second beam may be amplitude and phase modulated.

In a first specific example, both the first and second input beams are highly coherent transversely (i.e. in the cross-section of the beam). This is the case if the beam sources for both the first and second input beams are lasers and beam modulation is performed either with a spatial light modulator (SLM) in transmission or a liquid crystal on silicon (LCOS) device in reflection. Here we note that both SLMs and LCOS devices can be operated to modulate amplitude (only), to modulate phase (only) or to modulate both amplitude and phase.

In a second specific example, the first input beam is incoherent and generated by a 2D array of incoherent emitters (e.g. an LED or OLED array) which provides amplitude modulation through the ability to drive each emitter independently. The second input beam is coherent, as is a requirement for phase modulation, being based on a laser source whose laser beam is phase modulated (e.g. by an SLM or LCOS device) and optionally also amplitude modulated as mentioned already for the first specific example.

In the context of an RGB display, which requires three input beam pairs for generating the three colours, the same incoherent emitter array can be used to generate a first input beam that is used for all three colours whereas each colour has its own dedicated second input beam, the three second input beams being generated by three different laser sources with three different wavelengths that sum with the wavelength of the incoherent emitter array to produce red, green and blue light respectively. Time division multiplexing (i.e. slicing) can then be used to sequence through red, green and blue synthetic scene image generation through appropriate drive electronics that synchronizes the outputs of the IR emitter array and the three laser sources. This kind of sequential driving (or ON/OFF modulation) of the three laser sources provides a kind of temporal RGB image formation analogous to the colour wheel approach in desktop projectors. Provided the refresh rate of the three colours is sufficiently high, then the viewer perceives a full colour palette RGB image.

Since it is possible to impress both phase modulation and amplitude modulation onto one beam to produce a combined phase and amplitude modulated single beam (e.g. with an SLM or LCOS device), further embodiments are also possible in which the other input beam is not spatially modulated at all.

**Other Features**

Some other features of certain embodiments are now briefly summarized.

For input beam delivery into the display panel, a convenient approach is to introduce the first input beam at or close to one end of the display panel, e.g. the left end, and the second input beam at or close to the other end of the display panel, e.g. the right. However, it would also be possible to introduce both first and second input beams into the same end of the display panel. This could be enabled by a more complex phase matching scheme that uses appropriate reciprocal lattice vectors for the noncollinear phase matching. This could also be enabled by reflecting one of the first and second input beams from the other end of the display panel so that they cross in the same noncollinear geometry as for opposite end introduction of the first and second input beams.

There are various options for distribution of NLO material within the NLO material layer. In some configurations of the device the NLO material is distributed continuously over the NLO material layer, while in others it can be attractive to have a spots of the NLO material arranged in a grid over the NLO material layer. In the context of a grid-of-spots approach, it is noted that by NLO material we mean the NLO material that is phase matched to facilitate the nonlinear mixing, so that if QPM is used, then the spots could be localized regions that have been spatial structured for QPM within a layer of the same NLO material that is unstructured. With a grid-of-spots approach with confined localized regions of product beam generating NLO material, it is still possible to generate a convincing image, since the eye is continually swivelling. So long as the localized regions are close enough together so that light from at least one such region can be directed into the eye pupil, a convincing image can be formed.

In certain embodiments of the invention, the first and second input beams are each introduced at or close to one end of the display panel at a certain angle relative to the front and back faces of the display panel. Each input beam then propagates across the display panel to where the noncollinear mixing occurs by one or more reflections. In some embodiments, total internal reflection (TIR) from the display-panel-to-air interfaces is used to walk each input beams across the display panel from where it is introduced to where it crosses with the other input beam of its pair in order to generate the product beam. In other embodiments, reflective mirror layers are provided to the front and back of the NLO material layer to reflect at the wavelengths of the input beams, so that the input beams traverse the display panel by successive mirror reflections. One or both of the front and back mirror layers may be respectively at the front or back face of the display panel or be buried layers within the display panel. Mirror reflection allows for reflection at larger angles (i.e. closer to the normal) compared with TIR, which is beneficial if quasi-phase matching is used, since then the poling period can be larger, which is easier for fabrication.

Further functional layers can be added to the display panel. For example, it may be attractive to add a front filter layer to the front of the NLO material layer, which absorbs at the wavelengths of the input beams (and transmits at the wavelength of the product beam), so that any scattered input beam light is prevented from reaching the eye. In the case either of both of the input beams are laser beams, this will also help ensure laser safety requirements are met. A similar back filter layer can be added to the back of the NLO material layer to prevent input beam light escaping into the environment. If the display panel is for AR, then both the front and back filter layers should also be transparent across visible frequencies, so the natural scene light propagates through the display panel to the eye without attenuation.

A further safety measure is to provide one or more light sensors, such as photodiodes, outside the display panel to detect for abnormal leakage of input beam light out of the display panel that is indicative of the display panel being structural damaged. The light sensors may be arranged around the rim or outer edge of the display panel. Operation of the display apparatus can then be shut off if needed, e.g. when the display panel is damaged with a deep scratch. A further possibility for AR is to include a photochromic or electrochromic layer so that the transmission of natural scene light can be reduced, e.g. in bright ambient light conditions, so that the synthetic scene light blends with the natural scene light appropriately. The darkening operation can either be automatic (as in photochromic lenses) or electrically operated. Moreover, the darkening can either be uniform darkening across the whole lens area or localized, e.g. to attenuate light from bright spots in the natural scene. Vision correction lens layers can also be provided, either to the front of or to the back of the NLO material layer (or both if two correction lenses are desired). If a correction lens layer is provided, there is preferably an input beam mirror layer interposed between the NLO material layer and the vision correction lens layer, so that the input beam light does not enter the vision correction lens layer and hence the input beam paths are not affected. In other words, the TIR solution is not preferred when vision correction lenses are included.

## BRIEF DESCRIPTION OF THE DRAWINGS

This invention will now be further described, by way of example only, with reference to the accompanying drawings.

Figure 1 is an explanation of how imaging of a distant object requires wavefront information.

Figure 2 is a diagram showing how imaging through a lens element and into the eye relies on both wavefront direction and wavefront curvature.

Figure 3 is a diagram explaining why a point light emitter cannot be used in a near-to-eye display.

Figure 4 shows a nonlinear optical approach for generating near-to-eye artificial images that can be superimposed onto natural scene light.

Figure 5 shows the concept of quasi phase matching.

Figure 6 shows two dimensional phase matching and different grating vectors can be constructed.

Figure 7 shows an implementation of NLO mixing for generating synthetic scene light with bouncing paths within a lens.

Figure 8 shows non-collinear phase matching.

Figure 9 shows a more detailed figure showing nonlinear wavefronts overlapping in a layered NLO QPM material to create image information.

Figure 10 shows routes to allowing beams with different pairs of intersection angles relative to a QPM structure to overlap in a common place.

Figure 11 shows a scheme for steering beams into a device.

Figure 12a shows a scheme for deflecting a beam without angular change.

Figure 12b shows components to direct light to a desired point within a NLO material layer while altering the angles that the light approaches that spot.

Figure 13 shows a lens structure with input beams and emitters capable of creating image with desired apparent focus depth.

Figure 14 shows imprinting a desired wavefront through nonlinear mixing of amplitude and phase structured beams.

Figure 15 shows a system for creating a far field pattern from an image to allow conversion via an NLO material.

Figure 16 shows a multi-layered optical composite to create a display system.

Figure 17 shows altering the local Kg position across a spectacle type display system.

Figure 18 shows different lens designs in terms of cross-section with appropriate advantages.

Figure 19 shows a spectacle lens AR system incorporating multiple sensors and communications to an external computing device.

Figure 20 shows a spectacle system incorporating a series of diode elements around the outside to detect damage to the system.

Figure 21 shows an electrically controlled light dimming system incorporated into a lens.

Figure 22 shows a display device incorporating sub regions of NLO material, and with separate red, green and blue generating regions.

Figure 23 shows QPM period as a function of crossing angle for a simple second harmonic process, indicating why it is advantageous to use larger crossing angles.

Figure 24 shows an approach for creating a lens in which beams enter from one side, but maintain crossing in opposing directions.

Figure 25 shows a time sequenced displays to provide RGB and different ROC images to create a convincing full colour, and depth of field realistic display.

Figure 26 shows inwardly facing cameras to track pupil position.

Figure 27 shows how blanking based upon the inwardly facing cameras can be used to reduce unwanted visual effects.

Figure 28 shows a lens with an absorbing layer dispersed around the edge to prevent unwanted reflections of light.

Figure 29 shows a lens with sub regions of NLO material where each sub region contains elements capable of generating Red, Green and Blue.

Figure 30 shows that the beam crossing angles across a lens requires local control of the QPM grating direction.

Figure 31 shows a Virtual Reality (VR) configuration according to this invention, in which a near-to-eye image is created without the complexity of using a thin lens.

Figure 32 is a schematic diagram of image generation in an NLO material layer using an incoherent emitter array to generate one of the input beams.

Figure 33a shows various options for modulating the two beams that interact in the NLO material.

Figure 33b shows various options for phase controlling across an input beam to impart radius of curvature information.

Figure 34 shows a schematic of the control system showing the inputs and outputs.

**DETAILED DESCRIPTION**

OPTICAL CHARACTERISTICS OF THE HUMAN EYE AND HUMAN VISION

When designing a display apparatus, it is important to have regard to the optical characteristics of the eye as well as how the eyes are controlled individually and jointly by the brain, and also how the brain processes image information from the eyes.

To enter the eyeball, light passes through the eye pupil, through the cornea, through the eye lens and thence to the back of the eyeball where the retina is located. The effective radius of the pupil is controlled by the iris (pupillae muscle). The pupil dilates and contracts according to ambient brightness to increase and decrease the amount of light entering the eye. The pupil diameter varies over a range of a few millimetres, with a range of 2-4 mm being the most common. The eyeball diameter is about 25 mm.

If spectacles are worn, then the light from a distant object that passes into the eye passes through an area of the spectacle lens which is essentially similar in size to the iris diameter. The distance from a spectacle lens to the front of the eyeball is about 12-15 mm and is referred to as the back vertex distance or vertex distance.

The visual field of a single eye is referred to as the monocular visual field and is usually defined in terms of the angular range of what can be seen by the eye when the eye is pointing in a particular direction to fix its vision to a certain point. The monocular visual field in relation to the eye's vertical meridian extends laterally inward (towards the nose) by approximately 60 degrees and laterally outward by approximately 107 degrees. In relation to the eye's horizontal meridian, it extends vertically upwards by approximately 70 degrees and vertically downward by about 80 degrees. The binocular visual field is the superposition of the monocular fields of the left eye and right eye, so is appreciably greater laterally. In this document, references to 'the visual field' refer to the monocular visual field. If the binocular visual field is referred to, this will be expressly stated.

Normal human vision involves a series of movements of the head from the spine and swivelling of the eyes in their sockets. Head movements can be thought of corresponding to roll, pitch and yaw angles in relation to straight ahead, where yaw is produced by the normal left-to-right head swivel, pitch by the up-and-down head nodding motion and roll by side-to-side motion of the head. Eyeball swivel range for the human eye is about +25 degrees up, - 30 degrees down, and about $\pm 45$ degrees left and right. Eyeball swivelling is used to place the retinal image of the natural scene location that is of the most interest on the fovea, which is the subarea of the retina with the highest resolution, the fovea providing an angular range of about 1-2 degrees in the visual field (compared with about 18 degrees for the visual field of the whole retina, i.e. macula lutea). Furthermore, the eye moves around naturally (saccadic motion) which keeps the eyes moving to avoid effects of saturation and unresponsiveness. Thus the eye is constantly roving the scene, with the brain carrying out image processing which cancels out the blurring effects of eye motion.

For monocular vision, if one considers light emanating from a given point in a natural scene, the light will effectively be a spherical wave with an origin at that point. The spherical wave impacts on the front of the eye, passes through the cornea, pupil and eye lens and onto the retina. The refractive power of the eye lens is adjusted by the ciliary muscles to form a focused image of the scene light on the retina. The eye lens receives a wavefront, this wavefront having a particular central angle and radius of curvature. In the case of light from a distant point in the natural scene (effectively infinite distance), the waves can be treated as entering the eye as plane waves, i.e. the wavefront is a planar wavefront. For monocular vision perception of most individuals, infinite distance is any distance above about 4 or 5 metres. The angle which light incident from such a distant point makes to the axis of the eye determines the position on the retina where that light falls. In the case of light from a closer point in the natural scene, then the waves enter the eye with a finite radius of curvature, which is perceived in monocular vision by an eye's accommodation. The eye will accommodate, i.e. adjust its focus, to bring the light from the closer point to a sharp focus on the retina. The human brain links the amount of accommodation to object distance, so a distance perception arises. (Distance perception also takes account of the vergence effect from binocular vision.)

For monocular vision, we can therefore consider the natural scene to be an aggregate of point light sources at different positions in the monocular visual field, in which the 3D location information of each point is encoded by the light's input angle (i.e. 2D position in the monocular visual field) and the light's radius of curvature at the eye (i.e. depth). As well as 3D location information, it is of course the case that the light from each point additionally carries intensity information and colour information.

In near-eye display systems, such as AR and VR, the term 'eyebox' (or eye motion box) is used to refer to a volume within which the eye receives an acceptable view of an image, whether that be a real image or a virtual image. A simple definition of the eyebox is the 3D volume over which the entire field of view (FOV) is visible for a standard pupil size taking account of the fact that in human vision the eye is continually moving to focus on different areas within the FOV. The specified dimensions of the eyebox in AR or VR goggles are typically larger than the theoretical movement range of the eye pupil to cover for alignment tolerances and person-to-person variation in pupil distances.

NONLINEAR OPTICAL (NLO) MATERIAL

One kind of nonlinear mixing in a NLO material exploits the second-order nonlinearity $\chi(2)$. With nonlinear mixing there is conservation of energy, which means that the energy of the photons that are generated by the nonlinear mixing depends on addition of the energies of the photons of the input beams, which, given the Planck relation, means that the product light frequency is given by the sum or difference of the frequencies of the input beam frequencies.

Phase matching arises because of the wavelength dependence of the refractive index of a NLO material. The type of phase matching used in embodiments of the invention is known as noncollinear phase matching. Noncollinear phase matching occurs when two (or more) light beams with different directions of propagation cross to form a beam intersection region that lies in a phase-matched NLO material. Phase matching ensures that the wavevector of the product beam generated by the nonlinear mixing is the vector sum of the wavevectors of the input light beams (and the compensating grating k-vector). The term noncollinear phase matching is used in contradistinction to the term collinear phase matching, which refers to the situation in which two input beams overlap in space and copropagate so that the wavevectors of the input beams and the product beam are all in the same direction. Noncollinear mixing of two input beams can be characterized by the two angles subtended between the product beam and each of the two input beams which together sum to the crossing angle between the two input beams, i.e. the beam crossing angle. In the case of two input beams with wavevectors of equal magnitude, i.e. equal wavelengths, the two angles are equal and it is possible to refer to this angle as the beam crossing half-angle.

In practice, phase matching is commonly implemented with an approach called quasi-phase matching (QPM), which overcomes the fact that the phase mismatch of the dispersion of the refractive index in a birefringent material does not permit phase matching unless the birefringent material is very thin. A NLO material is structured to spatially modulate its nonlinear properties, typically periodic poling is used to create a linear grating structure with alternating signs of the second order nonlinearity $\chi(2)$. For noncollinear mixing, the phase matching requirement of a QPM NLO material needs to take account of the angles at which each of the input beams traverse the QPM NLO material. Here it is noted that the poling period that is required for noncolllinear mixing will be smaller than for collinear mixing, since only a component of the wavevector of each of the input beams will be in the poling direction.

Conventional birefringent NLO materials can be used. If the NLO material is quasi-phase matched then conventional inorganic NLO materials can be used, in particular oxides that are ferroelectric and which can be patterned by periodic poling. Examples are lithium niobate (LN) to create periodically poled (PP) lithium niobate (PPLN), magnesium oxide doped periodically poled lithium niobate (PPMgOLN), lithium tantalate (LT) to create PPLT and potassium titanyl phosphate (KTP) to create PPKTP. As is well known, microstructuring a ferroelectric NLO material with a QPM structure, e.g. a linear grating, is achieved by electric field poling. Some non-ferroelectric materials can also be processed to spatially modulate their nonlinear properties using a recently developed technique called orientation patterning, such as III-V Zincblende semiconductor crystals, e.g. GaAs. While orientation patterned GaAs is not transparent in the visible, other materials which are transparent could be used (e.g. orientation patterned GaN) could be used. Moreover, as well as using inorganic material such as the above, the poled NLO material may also be an organic material (or layers of an appropriately non-centrosymmetric organic material). It is also worth stating that electric field poling of layers could be implemented.

DESCRIPTION OF FIGURES

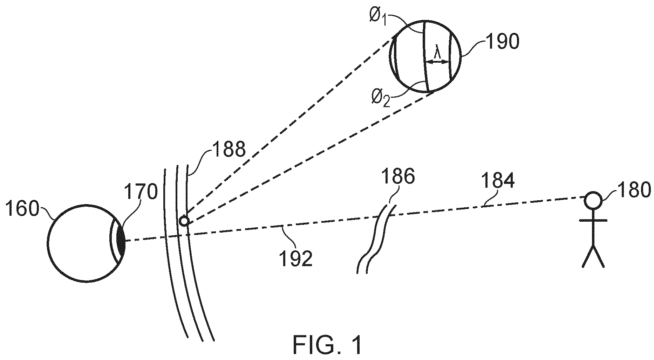

**Figure 1** shows a diagram of how an image is received by the human eye showing an eyeball 160 with a pupil 170. The eye receives an image of an object 180 illustrated as a 'stick man'. The light scattered from the object 180 is received at the pupil 170 and is then focused by the eye's lens to the retina at the back of the eyeball where it is detected by rod and cone cells. The light can be considered as rays of light 184. Typically the distance between the eyeball 180 and the object is at least 15 cm (or so), representing the near point of the eye. The distance can be much larger; in the case of starlight for example this is millions of kilometres or greater. The fact that this distance may be 'large' is indicated by the lines 186 to represent a discontinuity of scale in the figure. The light scattered from the object may be represented by wavefronts 188, an inset of which is shown as 190. Each wavefront is separated by one wavelength $\lambda$ of the light. There is a defined phase relationship between any two points on a given wavefront (indicated here as $\phi\_1$ and $\phi\_2$. In this diagram the wavefronts are shown to be curved with a wavefront curvature that corresponds to the distance 192 from the object 180. The lens of the human eye changes shape under muscular control (the ciliary muscles), and the shape taken creates a focusing of the incoming (generally curved wavefront) such that a desired part of the field of view is brought to a sharp focus on the retina.

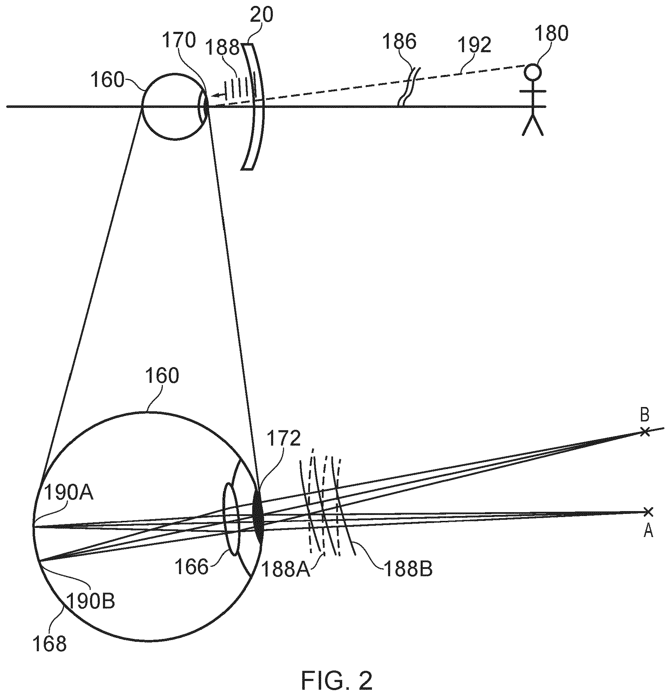

**Figure 2** shows an eye 160, an object 180, which is arranged at a distance 192 from the eye 160, this distance being large. A spectacle lens 20 is arranged in front of the eye. The light scattered from the object 180 that has passed through the spectacle lens is associated with a wavefront 188. Two sets of optical rays are shown emanating from points A and B. Point A is on-axis and Point B is off-axis in respect of the principal optical axis of the eye 160. The light incident on the eye enters the eye through the pupil as controlled by the iris 172. Light rays emanating from Points A and B are associated with respective wavefronts 188A and 188B and are focused at two different points 190A and 190B respectively on the retina 168 by the eye lens 166. The angle that the light rays make to the optical axis of the eye determines where on the retina the image is formed, while the wavefront curvature determines the position of focus.

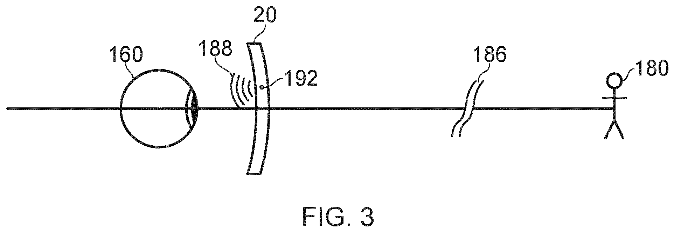

**Figure 3** shows that light emitted from a point source close to the eyeball will have a wavefront curvature that cannot match the wavefront curvature of light from a natural scene. An eyeball 160 and a distant object 180 are shown. The wavefront curvature of the light from the object 180 corresponds to the distance from the object, which is 'large'. A piece of optical material (a spectacle lens) 20 is located close to the eyeball and is shown as hosting a point source of light 192. This point source 192 could be fluorescence from the optical material (such as a dye or a rare-earth element) or a scattering point (such as from a dust particle). The point source will create wavefronts 188 centred at the point source 192 with an associated radius of curvature. Because the point source is located very close to the eyeball (e.g. of the order 1 cm), the radius of curvature of the light will be small when it enters the eye. This creates two problems to be solved. Firstly, the wavefront emanating from the point source 192 is too divergent to be focused by the eye lens (i.e. the eye cannot create a sharp image on the retina). Secondly, the radius of curvature of the wavefront emanating from the point source 188 will be very different from that of the natural scene light from, for example, the object 180. To solve the first problem, the radius curvature must have a value above the threshold needed for the eye to be able to focus the image onto the retina. To solve the second problem, if the AR light source creates an object on the optical material, then, in order to obtain a convincing visual effect, it is necessary to make the radius of curvature of the light representing the virtual object the same, or approximately the same, as it would be if the virtual object were a real object. For example, if the real scene is of a golf course green with a hole, and the virtual object is a golf ball that is putted into the hole, then the radius of curvature of the wavefront representing the golf ball needs to be matched to the radii of curvature from the real scene in the proximity of where the golf ball is being presented. Such matching is what makes the distance perception realistic for the viewer. Such matching is also important for a pleasant viewing experience, since large discrepancies between wavefront curvatures presented to a viewer in a single scene is known to be unpleasant, since the natural match between the point on which the eye focuses (accommodation) and the point where the optical axes of the two eyes cross for binocular vision (vergence) is broken. This is referred to as the vergence-accommodation conflict which induces headaches and feelings of nausea similar to motion sickness. In this context, it is noted that in an AR (or MR) system outward facing cameras in combination with distance-measuring devices, such as LiDAR, can be used to survey the scene and obtain relevant information on an appropriate placement of virtual objects in the scene. An AR headset may wish to overlay an image of a new object onto a natural scene. This may be to overlay an object that is not present in the natural scene (e.g. to show two tennis players playing a match overlaid onto a natural scene of an empty tennis court). An AR headset may also wish to replace the image of a real object in a scene with a virtual object (e.g. to replace images of farm animals in the natural scene with images of dinosaurs).

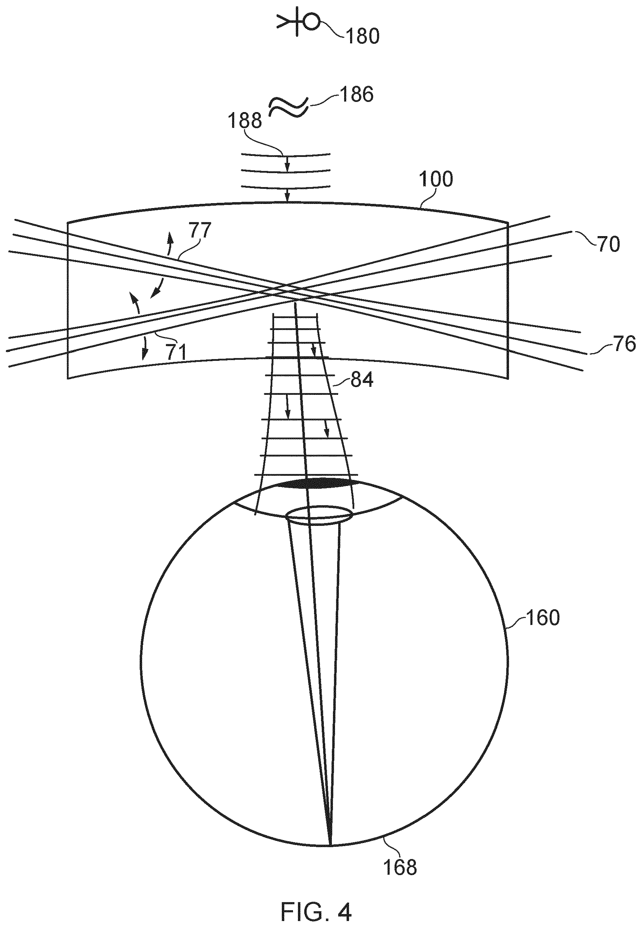

**Figure 4** is a schematic drawing illustrating operating principles used by embodiments of the invention. An eye 160 with retina 168 is shown. A piece of transparent (in the visible) NLO material 100 in the format of a spectacle lens with a front (proximal) face and a back (distal) face is arranged in front of the eye at a vertex distance. Light leaving the spectral lens from the front face towards the eye of the wearer travels in a proximal or inward direction. Light leaving the spectral lens from the back face away into the environment travels in a distal or outward direction. We refer to the lens as a spectacle lens by virtue of its format but this does not imply the lens has any vision correction function.

First and second input beams 70 and 76 are input into the NLO material 100 and cross so that an intersection region is formed within the NLO material 100. This is a noncollinear geometry. The first and second input beams 70, 76 have respective first and second frequencies. The first and second frequencies may be the same as each other or different. In the intersection region, nonlinear mixing occurs by sum frequency generation (SFG) and a product beam is generated. The product beam has a sum frequency that is equal to the sum of the first and second frequencies.

The product beam generated in the intersection region by the nonlinear mixing is effectively a point source and, as such, creates its own wavefront 84 with a wavevector direction that will send the product beam light to the pupil. The product beam is only generated where the beams overlap, i.e. in the intersection region. The NLO material can be chosen to be transparent to visible light and so the viewer can 'see through' the material, as would be needed for AR to allow a synthetic scene image to be superimposed onto the natural scene, as shown schematically by object 180 with wavefront 188, which is distant (represented by the discontinuity 186.

The physics of an extended source generated by nonlinear mixing, as proposed, is different from that of an extended source created by projection or emission from a fluorescent material in that nonlinear mixing by crossed beams allows for wavefront generation and phase matching, which can for example be realized with quasi-phase matching, so that the product beam can be generated in the intersection region with, in principle, any desired radius of curvature.

The synthetic scene image can be produced in the NLO material in a number of different ways. One option is to move the first and second input beams, as indicated by reference numerals 71 and 77, so that the angle of beam crossing is a function of position across the image generation area to "write" the synthetic scene image into the NLO material. To achieve this, the point of entry of the input beams into the NLO material may need to be varied. If the first and second input beams are appropriately modulated in intersection angle and amplitude, then a synthetic scene image can be built up, e.g. using some kind of rastering. Another option is to provide one or both input beams with a patterned cross-section, e.g. a 2D amplitude modulation, such that when the two input beams mix in the intersection region a complete object is created by the static overlay of the two input beam cross-sections and their angular spectrum. A combination of these two approaches may be used with a hybrid of scanning and beam-profile modulation. Within the general concept of generating the light of the synthetic scene image by a phase matched nonlinear process, it is further noted that the wavefront 84 generated by such nonlinear mixing can be given a desired direction as well as a desired radius of curvature, the desired direction being towards the eyeball as illustrated.

In summary, an image is created on the retina 168 which combines a wavefront 188 from the natural scene and a wavefront 84 of a synthetic scene image generated in the lens, wherein both wavefronts have the same or similar radii of curvature.

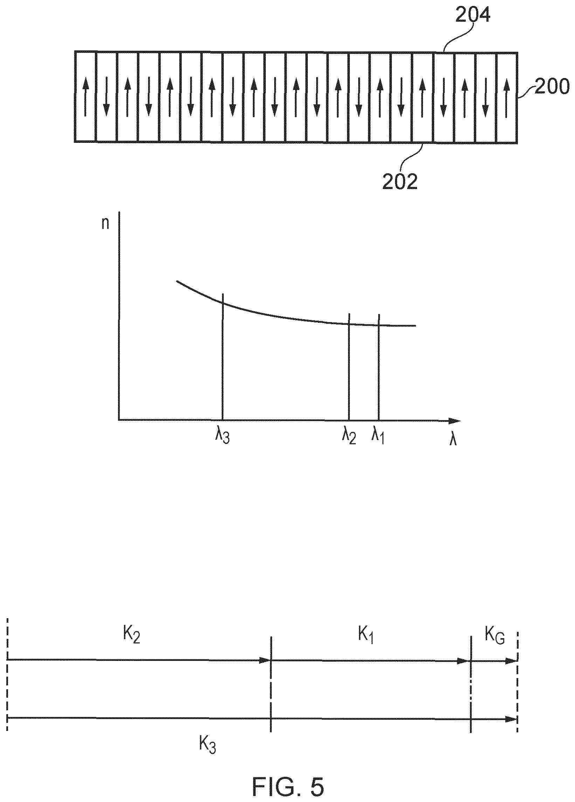

**Figure 5** shows key concepts of quasi-phase matching (QPM). QPM is a property that can be impressed in certain nonlinear crystals through a method known as periodic poling. A ferroelectric nonlinear crystal is processed by periodic poling in order to create a periodic domain structure which modulates the sign of the crystal's nonlinear susceptibility so that it alternates positive and negative when light propagates along a certain direction within the crystal. Periodic poling thus mimics the effect of bonding slices of a birefringent material together into a stack with alternating crystallographic orientations, which is of course not practical, at least not for anything other than extremely long wavelengths in the very far infrared or microwave regions. A ferroelectric material most commonly used for periodic poling is lithium niobate, which after periodic poling is referred to as periodically poled lithium niobate (PPLN). Another material is periodically poled potassium titanyl phosphate (PPKTP). More recently, a technique called orientation patterning has been developed to allow periodic poling of non-ferroelectric materials, such as III-V Zincblende semiconductor crystals such as GaAs. As well as using inorganic material such as the above, the poled NLO material may also be an organic material.

As illustrated in the upper portion of the figure, a QPM NLO material 200 comprises an alternative series of layers with 'up' and 'down' domains 202 and 204 respectively. The material is structured this way because the dispersion of the material (the variation of refractive index with wavelength) prevents efficient nonlinear mixing due to a phase mismatch. This is shown in the middle part of the figure, which shows how the refractive index, n, depends upon wavelength, $\lambda$. In general, the refractive index of a usual NLO material decreases with increasing wavelength (called normal dispersion). In SFG, three wavelengths are involved. First and second wavelengths $\lambda_1$ and $\lambda_2$ mix to create a third wavelength $\lambda_3$ with a wavelength such that energy is conserved. The wavelength of the nonlinear mixing (in this case sum frequency mixing) is set such that

$$1/\lambda_3 = 1/\lambda_1 + 1/\lambda_2$$

which corresponds to conservation of energy.

Because refractive index varies with wavelength, there is a phase mismatch between the three optical wavevectors. The wavevectors are given by

$$K_i = 2 * \pi \, n_i / \lambda_i$$

where

$n_i$ is the refractive index of the NLO material at wavelength i, and
$\lambda_i$ is wavelength.

A wavevector matching diagram is shown in the lower part of the figure in which $K_3$ (is longer than the vector sum of $K_1$ and $K_2$. This difference occurs because the refractive index at $\lambda_3$, $n_3$, is greater than the refractive indices $n_1$ and $n_2$ at wavelengths $\lambda_1$ and $\lambda_2$. The k_vector mismatch is $K_G$. In quasi-phase matching, the period of the QPM structure 200 is set such that

$$Lg = 2 * \pi / K\_G.$$

where Lg is the QPM period. It should be emphasised that in this discussion it is assumed that the waves are co-propagating in the same direction.

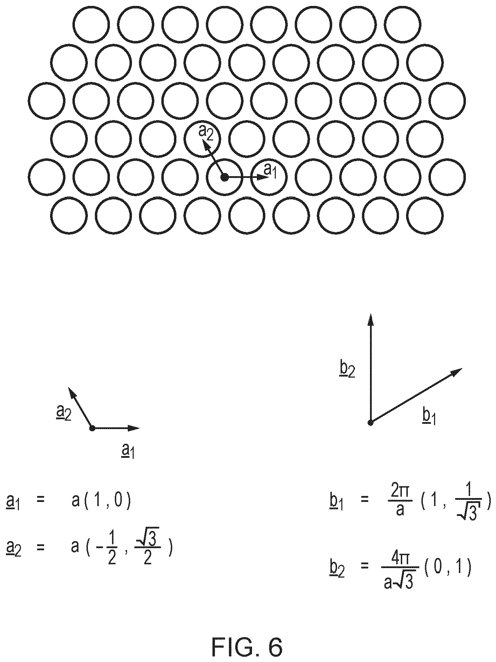

**Figure 6** shows a more complex geometry of a poled NLO material. Instead of the quasi-phase matching structure being a simple linear grating structure, the nonlinear crystal is processed by poling local regions to cause their domains to point upwards out the plane of the drawing ('up' domains) in the nonlinear crystal that naturally has 'down' domains pointing in the opposite direction. The shape of the poled regions may advantageously follow the crystal symmetry of the NLO material, so for example may be hexagonal in the case of LiNbO3. The illustrated pattern is of circular poled domains in a hexagonal close packing (HCP) pattern, but any other distribution may be chosen, e.g. a square or rectangular packing of square or rectangular domains. Moreover, the patterning could be aperiodic. The diagram shows the physical structure as having two vectors a_1 and a_2 which represent the period of the two dimensional poling. Also shown are the two associated K_G basis vectors b_1 and b_2. It should be noted that these can be used to phase match interactions in noncollinear wave mixing, so that other choices of angle can be used. All that is needed is for suitable nonlinear grating vectors to exist which permit the phase matching diagram to create a product beam that is appropriately directed, i.e. into the pupil of the eye.

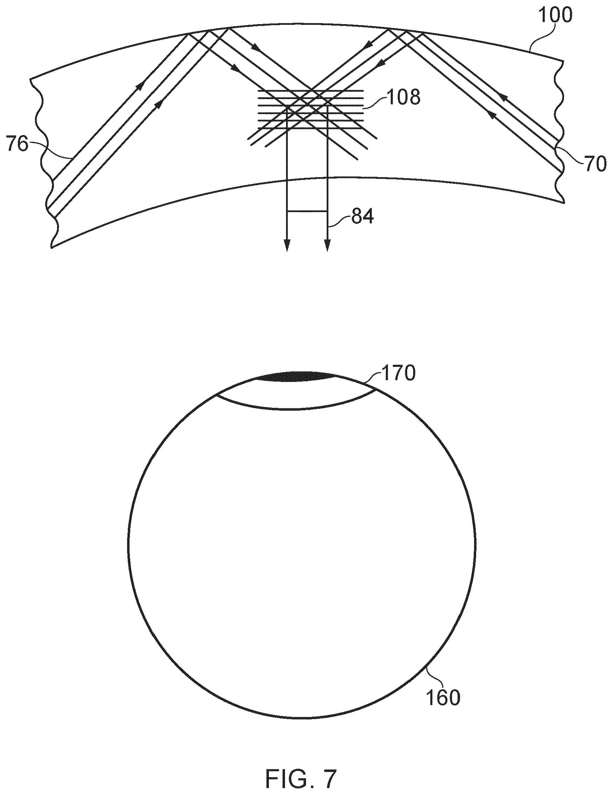

**Figure 7** is a schematic drawing of part of a piece of NLO material 100, wherein the NLO material is spatially modulated in a region 108 in respect of its second order nonlinearity to provide quasi-phase matching to the crossing input beams 70, 76. The QPM region 108 is schematically illustrated as a linear grating. The first and second input beams 70 and 76 are introduced into the lens from opposite ends and propagate via one or more reflections, e.g. total internal reflections from the inner and outer surfaces of the NLO material 100 (one reflection from the outer surface is illustrated for each of the first and second input beams 70, 76 until they cross in the intersection region which overlaps with the QPM region 108. The quasi-phase matching condition is satisfied in the QPM region 108 and product beam 84 is generated by the nonlinear wave mixing to generate a wavefront that propagates towards the pupil 170 of the eyeball 160.

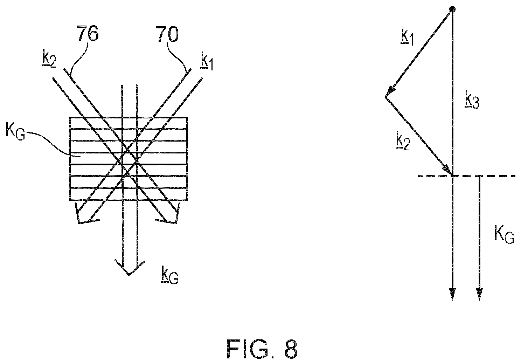

**Figure 8** shows another representation of the input beam intersection region. The first and second input beams 84 and 85 have respective wavevectors k_1 and k_2 producing a product beam having a wavevector k_g which is the vector sum of k_1 and k_2. Ideally the vector sum of k_1 and k_2, i.e. k_g, should be exactly equal to the wavevector associated with the QPM grating period, K_G, in order for greatest conversion efficiency. The phase matching vector diagram is shown in the right hand figure. It is noted that the period of the QPM grating period that is needed can be calculated by simple trigonometry from the input wavevectors k_1 and k_2 and taking account of the dispersion characteristics of the NLO material.

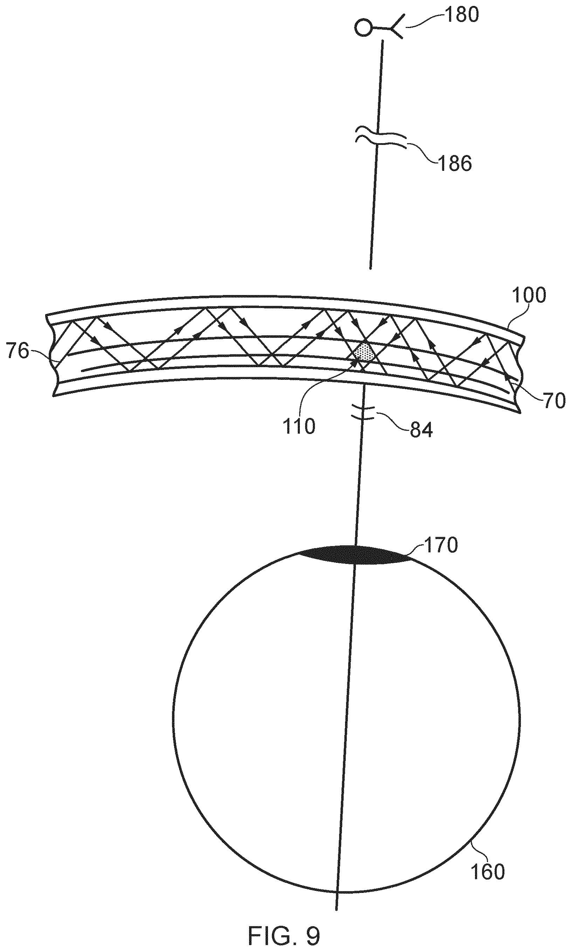

**Figure 9** is a schematic drawing of a display panel incorporating a NLO material layer 100. It can be seen that first and second input beams 70, 76 are directed to traverse the display panel 100 by multiple reflections from mirror layers formed to the front and back of the NLO material layer so that the beams 70, 76 cross each other in an intersection region 110 and generate a product beam wavefront 84 by nonlinear mixing. It will be understood also that the beams 70, 76 are brought to a focus at the intersection region 110. A distant object 180 is arranged some metres from the eye, indicated by the discontinuity 186. Natural light is scattered from the distant object 180 towards the eye 160. The product beam light representing a synthetic scene is therefore superimposed onto the light from the natural scene light. The light passes through the pupil 170 and into the eye 160 to form a fused synthetic/natural scene image on the retina.

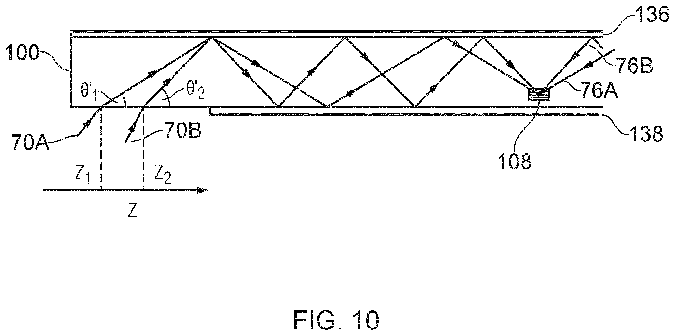

**Figure 10** shows a display panel with a multilayer structure comprising a NLO material layer 100, a front mirror layer 136 and a back mirror layer 130. The front and back mirror layers are reflective at the frequencies of the input beams and transmissive across visible frequencies. Two different input beam paths 70A, 70B for a first input beam are shown to illustrate how the angle and position ($\theta$, z) at which an input beam is introduced into the display panel can be varied to vary the angle at which an input beam crosses the intersection region. The back mirror layer 138 covers a central part of the display panel but not a left end portion of the display panel's front face. The first input beam is introduced into this left end portion at an angle and position ($\theta1$, z1) or alternatively ($\theta2$, z2). The first input beam is then scattered from the front mirror layer 136 onto the back mirror layer 138 etc. and thereby traverses the display panel to an intersection region 108 containing a QPM grating structure 108. A second input beam is introduced similarly at a right end portion of the display panel (not shown) and arrives at the intersection region 108 along beam paths 76A or 76B. The first and second input beams then cross each other in a noncollinear geometry at the QPM region 108 and generate the product beam by sum frequency generation. The desired position and angle for introducing the input beam can be calculated simply by ray tracing back from the point where the intersection region 108 is desired and what angle the input beam should cross the QPM region 108. As the path length of each beam changes as a consequence of varying the angle and position of the injection of each beam into the display panel, lenses or other focusing elements external to the display panel (not shown) can be adjusted to ensure that both beams 70, 76 remain focused in the intersection region 108.

Provision of mirror layers 136, 138 allows for reflection over a wider range of angles than is possible when total internal reflection from the panel-to-air interface is relied upon. Here it is noted that, if the nonlinear mixing process is by frequency addition, and assuming the usual case where the image is formed in the visible region, and further assuming the frequencies of the light beams that mix are either the same or not too dissimilar, then the light beams will be in the infrared (IR) wavelength region, so that the reflective coatings will be designed to efficiently reflect light at the infrared wavelength (or wavelengths) of the light beams.

Alternatively, both the first and second input beams could be inserted from the same end of the lens and the lens structure could be designed so that the second beam is reflected from a reflective element to the right of the figure and thus bounce back along the paths 76A or 76B as illustrated. It will thus be appreciated that by appropriate routing and/or scanning of the first and second input beams they can be introduced to propagate in the lens at different angles where changes in the angle necessitate different points of introduction to ensure the intersection region does not move.

It will be appreciated that the first and second input beams can only be exactly phase matched to the QPM NLO material at one specific combination of their respective angles. Therefore scanning the input beams to vary their angles will cause the phase matching of the crossed input beams with the QPM NLO material to become gradually less exact with increasing divergence of the angles from the specified perfect phase matching angles. The conversion efficiency, and hence the intensity of the mixed product beam light, will thus gradually reduce as these angles moves away from the specified angles. Since the conversion efficiency is a function of beam angle and will therefore vary while scanning each beam, e.g. by rastering, this can be compensated for by a temporal variation of the beam intensity during scanning to ensure a non-varying intensity scale for the product beam light generation across the synthetic scene image.

It is also generally preferred to make the distance between the front and back mirror layers sufficiently large that the number of reflections (bounces) is kept to a relatively low number while at the same time allowing relatively large bounce angles $\theta$. This reduces overlap between spots (i.e. beam intersection regions) which in turn reduces unwanted waveguiding and modal excitation effects.

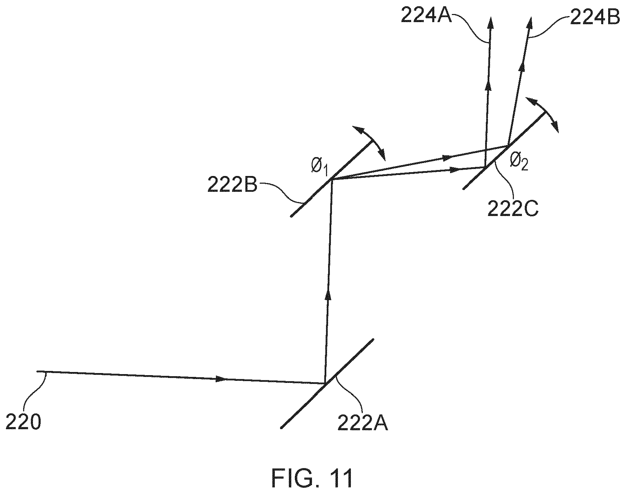

**Figure 11** shows example optical components for routing an input beam from a beam source (not shown) to the display panel (not shown). A beam 220 from the beam source strikes a first mirror 222A and passes onto a second mirror 222B, which is rotatable by an angle $\phi\_1$, and then onto a third mirror 222C, which is rotatable by an angle $\phi\_2$. Different beam paths 224A and 224B can thus be produced which arrive at different angles and positions on the display panel. It will be understood that this is simply one example of optical components capable of carrying out the routing, and other approaches can fulfil the same function.

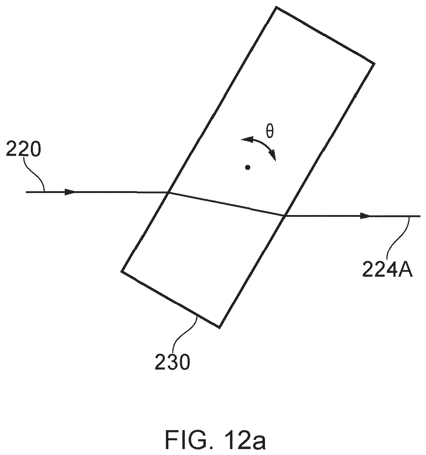

**Figure 12a** shows a further example optical component 230 which may be included in the optical components for routing the input beam from a beam source, in the figure the component is a simple optical glass block. The optical component 230 allows for translating a beam, i.e. changing its position, without changing its angle of propagation. The optical component 230 is mounted to be rotatable about an angle $\theta$ and is a block of glass or other optical material 230. The optical component 230 is transparent for the beam 220. The beam 220 enters the optical component 230, refracts at the input face and traces the path shown through the block. Upon exit the beam path is translated downwards to beam path 224A which is displaced according to the angle $\theta$ but remains parallel to beam path 220. Thus a displacement with change in angle is achieved. With polarized light the optical element (glass block) 230 may be placed so as to exploit Brewster's angle to minimise unwanted reflections, or alternatively it may be anti-reflection coated. In a miniaturised system various suitable implementation technologies exist, for example microelectromechanical systems (MEMS) mirror technology, electro-optics and other known beam scanning technologies. A desire for miniaturisation and also limiting the number of moving parts makes solid state or MEMS devices attractive.

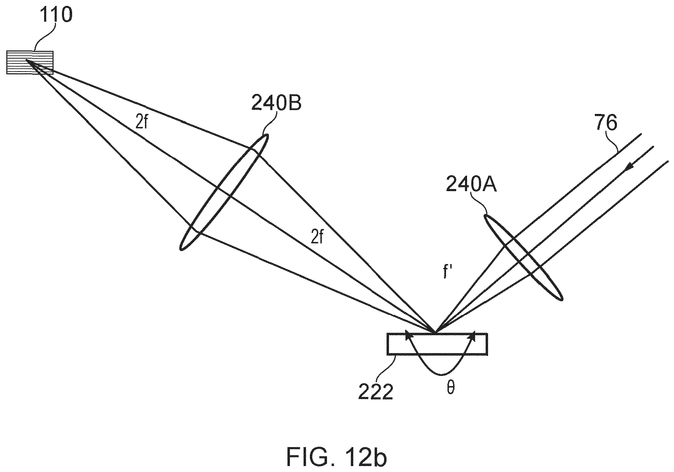

**Figure 12b** shows components to direct light to a desired point within an NLO material layer while altering the angles that the light approaches that spot. The diagram shows an input beam (shown here coming from the right hand side of the diagram. This input beam, in this case labelled 76 to match other diagrams, passes into a first lens 240A. This first lens 240A is placed one focal length (f') from a rotatable mirror 222. Assuming the input beam 76 is approximately collimated, the lens 240A will create a small focused spot on the mirror 222. The light reflected from the mirror 222 is directed towards a second lens 240B. The second lens 240B is placed a distance 2f from the mirror 222 and images the small spot from the mirror 222 onto the desired refocused spot labelled 110 since this light beam is to be delivered into the NLO material where it crosses with the other beam. In this example, the distance from lens 240B to the refocused spot is also 2f. These focal length values satisfy the conventional imaging requirement. When the mirror 222 rotates (see rotation angle $\theta$) around either axis, the resultant beam paths will be deflected, but, because of the imaging operation of lens 240B the spot of light will be sent to the same location 110, but will approach with an angle set by the rotation of the mirror 222. Advantageously the mirror 222 will be rotated so that its centre of rotation is coincident with the reflective surface of the mirror. It will be understood that various values of focal length can be used, so long as the mirror is imaged into the beam-crossing interaction region. Moreover, further optical elements may be inserted into the system so as to steer the crossing point to a desired region of the display element (AR spectacle system). Furthermore, additional optical elements may be used to ensure that, wherever within the display system the desired interaction region is placed, it will still have an appropriate size.

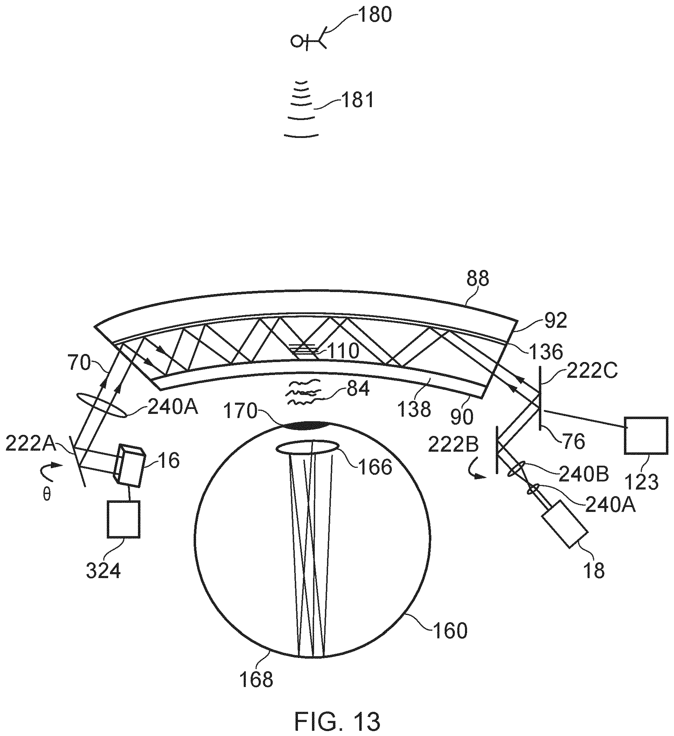

**Figure 13** shows an AR display apparatus according to an embodiment. A first one of the input beams has a beam profile that is phase modulated and the other of the input beams has a beam profile that is amplitude modulated, so that in the intersection region 110 where the two input beams cross both amplitude and phase modulation is encoded into the product beam generated by the nonlinear mixing of the first and second input beams in the phase-matched NLO material layer. The display panel generates an image of a synthetic object. The necessary information for the synthetic scene image is effectively encoded in the angular spectrum of product beam light hitting the eye. The focus requirement of the eye lens 166 is such as to take the curved wavefront 181 from the natural scene object 180 and bring it to a single focus on the retina 168. An eyeball 162 is shown with a pupil 170, an eye lens 166 and a retina 168. The pupil 170 of the eye receives light from a natural scene object 180. The natural scene object 180 scatters incident light, which creates a wavefront 181 with spherical waves. The light of the wavefront 181 passes through the display panel, impinges upon the eye, enters the pupil 170, and is focused by the eye lens 166 to form a sharply focused image on the retina 168. If light were emitted and ray traced from other points on the natural scene object 180 it would present at different angles to the optical axis of the eye and be focused at different positions on the retina 168.

When an AR headset is worn, the display panel 88 is arranged in front of the eye 160. The display panel 88 is transparent to light scattered from the natural scene, such as contained in the wavefront 188, and additionally generates artificial images responsive to crossed pairs of image generating input beams, one pair being shown. Image information is delivered to the display panel 88 through a suitable delivery setup. The display panel 88 is shown as curved, and has an outer surface 92, and an inner surface 90 which from the interfaces from the display panel 88 to air.

The display panel 88 shown has a composite layered construction with a NLO material layer and front and back mirror layers 136, 138. The mirror layers 136, 138 are reflective at the infrared wavelengths of the input beams.

The NLO material layer of the display panel 88 has a QPM region 108 arranged to cover a portion of the display panel 88, which is illustrated as being quite a small portion, although it will be understood that the QPM region 108 could extend over the whole of the eye's visual field when the eye is pointing straight ahead and/or over the whole of the eye's visual field at all possible swivel angles and/or the whole area of the NLO material layer.

Referring to the left-hand side of the figure, a first input beam 70 is provided that is amplitude modulated. The first input beam 70 is generated by an emitter array 16 which encodes image information in the beam cross-section by amplitude, i.e. intensity, modulation by suitable driving of the individual emitters of the array. The first input beam 70 is emitted from the emitter array and then reflected by a mirror 222A and transmitted through a relay lens 240A onto a left end face of the display panel 88. The mirror 222A may be deflectable, e.g. by rotation in one or two axes, to alter the path of the first input beam 70. Similarly, the lens 240A may be translatably and/or rotatably mounted to alter the ray path of the first input beam 70. Moreover, other mirror, lens or other optical components may be included for beam manipulation of the direction, position and divergence of the first input beam 70. The position and angle at which the first input beam 70 is introduced into the end face of the display panel can thus be adjusted. The left end face of the display panel is illustrated as being set at an angle relative to normal, i.e. a 90 degree cut-off of the display panel, to facilitate in-coupling of the first input beam 70. Alternatively, the first input beam 70 could be introduced into the front face of the display panel. Another alternative is to use a grating in-coupling of the first input beam 70, where the grating could cover an area portion of either the front face or the end face of the display panel. After introduction into the display panel, the first input beam 70 traverses the display panel from left to right by successive reflections from the mirror layers 136, 138. Referring to the right-hand side of the figure, a second input beam 76 is provided that is phase modulated. The second input beam 76 is generated by a laser source 18. The second input beam 76 passes from the laser source 18, through beam expanding lenses 240A and 240B, to a first plane mirror 222B where it is reflected onto a second mirror 222C. The second mirror in this beam path 222C is a phase retarding mirror (allowing a spatially varying phase to be imparted on the input), such as a liquid crystal phase modulator, and is used to impress the spatially structured phase modulation onto the laser beam. The same comments apply to the second input beam 76 as made above for the first input beam 70 in terms of its introduction into and propagation across the display panel 88. The second input beam 76 is illustrated as being introduced into a right end face of the display panel. The first and second input beams 70, 76 then cross in the intersection region 110 where the QPM NLO material is located resulting in generation of a product beam with a wavefront 84 and a frequency at the sum frequency of the first and second input beams 76. The wavefront 84 enters the pupil 170 and then is focused onto the retina 168. The product beam light is superimposed on the natural scene light 181 from object 180. By setting the radius of curvature of the wavefront of the second input beam 76 (by imposing a spatially structured phase retardation across the beam), the synthetic scene image can also be given any desired radius of curvature so that the synthetic scene image is a virtual image formed at any desired distance from the eye. The radius of curvature of the second input beam 76 can be altered by using Gaussian beam optics, so reducing the size of the laser beam. Reducing the laser beam's cross-sectional area, will increase the beam divergence of the resulting nonlinear wavefront.

It is thus possible to vary the virtual image distance of a synthetic scene image to provide a fused synthetic and natural scene image on the eye in which the synthetic scene image fits into the natural scene in a realistic manner.

In the above embodiment, it was implicitly assumed that the QPM NLO material is a simple linear grating. However, in further embodiments, the QPM NLO material may have a more complex spatial profile that incorporates some curvature so as to generate a diverging (or converging) product beam. In still further embodiments, it is possible to impress both amplitude information and phase information onto either or both of the first and second input beams 70, 76.

The emitter array 16 may be an OLED array such as a micro-OLED array. There is a controller device 324 which controls the output of the OLED array to create the intensity information in the image. Other options for the emitter array include an inorganic LED array, an array of quantum dot emitters, liquid crystal devices with appropriate back illumination, liquid crystal on silicon (LCOS) with appropriate illumination, VCSEL array, and tilting MEMS display devices of the digital micromirror device (DMD) type such as DLP devices from Texas Instruments. It is noted that the system does not require coherence in the amplitude structured beam and this is advantageous both in allowing incoherent emitter light sources (such as micro-OLED arrays) but also in reducing speckle in the system.

The first input beam 70 is thus formed by imposing a varying phase modulation on a beam generated by a single emitter, such as a laser, with for example a Gaussian intensity profile. The second input beam 76 is generated by an emitter array so as to have a beam cross-section that carries a spatially varying amplitude modulation. In other embodiments, the first input beam 70 could have a cross-section that is spatially modulated in both phase and amplitude while the second input beam 76 may be modulated in either phase or amplitude or both. A suitable source for combined phase and amplitude modulation would be a phase controlled emitter array, such as a VCSEL array with external phase modulation, or an array of independent emitters with appropriate phase control.

An advantage of embodiments which allow both the first and second input beams to have spatial modulation of their intensities is that this can be used to compensate for the fact that different parts of each beam cross-section will be more and less exactly phase matched to the QPM NLO material. The display apparatus may be designed such that light along the principal optical axis of each beam is exactly phase matched with the QPM NLO material where they cross in the QPM region, whereas the phase match of the crossed-beam components with the QPM NLO material will become gradually less exact with increasing distance away from the optical axis of each beam. The conversion efficiency will thus gradually reduce as one moves away from the optical axis of each beam. The intensity profile of the beam can therefore be modified to increase the intensity at the extremities of each beam so that the intensity scale of the product beam light is kept constant across the whole crossing region of the beams.

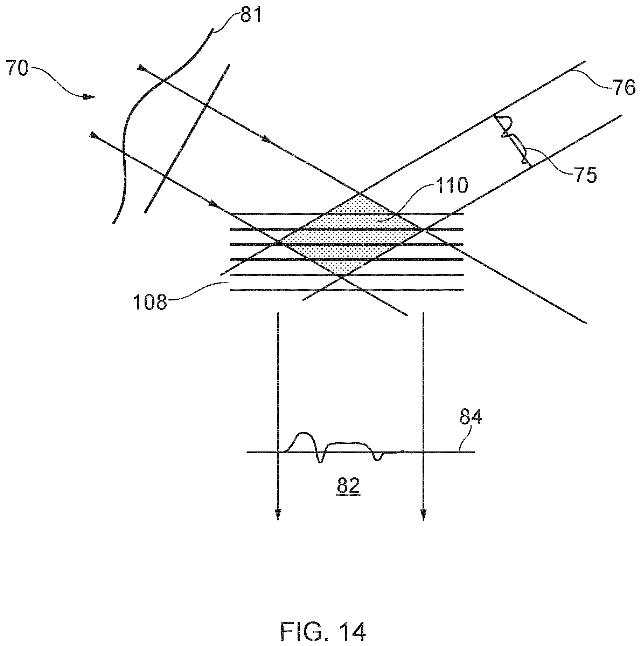

**Figure 14** is a schematic drawing of the beam intersection region 110 where QPM NLO material 108 is located. A first input beam 70 has a beam cross-section with an approximately Gaussian profile 81 to provide a simple planar phase front, i.e. there is no spatial phase variation across the beam, or only that inherent to it being a Gaussian beam . A second input beam 76 has a beam cross-section which, in the general case, is both amplitude and phase modulated according to respective amplitude and phase modulation functions 75. The first and second input beams 70 and 76, which are in the infrared, interact via the second order nonlinearity of the QPM NLO material 108 to exploit a phase matching scheme as described further above with reference to Figure 8 with an appropriate nonlinear grating K-vector. The nonlinear interaction causes a nonlinear polarisation at a frequency, which in this case is at the sum frequency of the first and second input beams, the sum frequency being in the visible, to generate an output beam 82 having a wavefront 84 which varies in both amplitude and phase in a way determined by the amplitude and phase of the input waves. The information encoded into the second input beam by the amplitude and phase modulation functions 75 is thus transferred to the product beam wavefront 84.

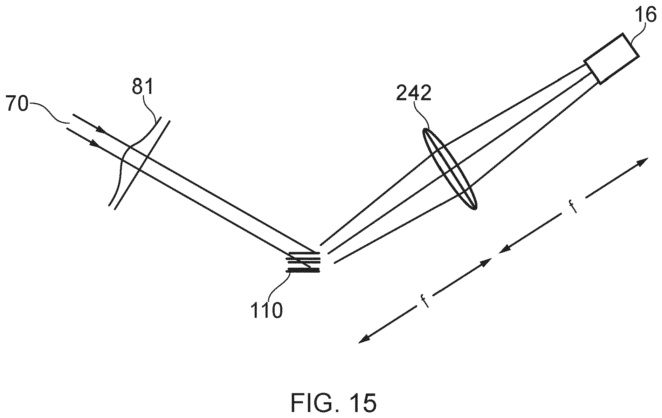

**Figure 15** is a schematic diagram applicable to the setup of Figure 14. Namely, there is a first input beam 70 with a beam cross-section of an approximately Gaussian profile 81 to provide a plane wave wavefront combined with a second input beam with an amplitude and/or phase modulated wavefront. The second input beam is generated by a suitable emitter array 16 which is located at one focal length, f, from a relay lens 242, which in turn is located one focal length, f, from the intersection region 110. This arrangement places the image information contained in the amplitude and phase modulated wavefront from the emitter array 16 in the Fourier plane of the imaging system. The resulting visible beam generated by the nonlinear mixing of the input beams will therefore contain the same spatial image information as contained in the second input beam, this image information then passing to the eye encoded essentially in plane waves. The visible product beam light generated by the nonlinear mixing will have wavefronts with radii of curvature that follow from the radius of curvature of the first input beam 70 so that the product beam light will have an equivalent imaging position determined by the radius of curvature of the first input beam 70. The foreshortening caused by the finite crossing angles of the two input beams can be compensated for using simple trigonometry, and taken into account in either or both of the beam profiles / and the construction of the image.

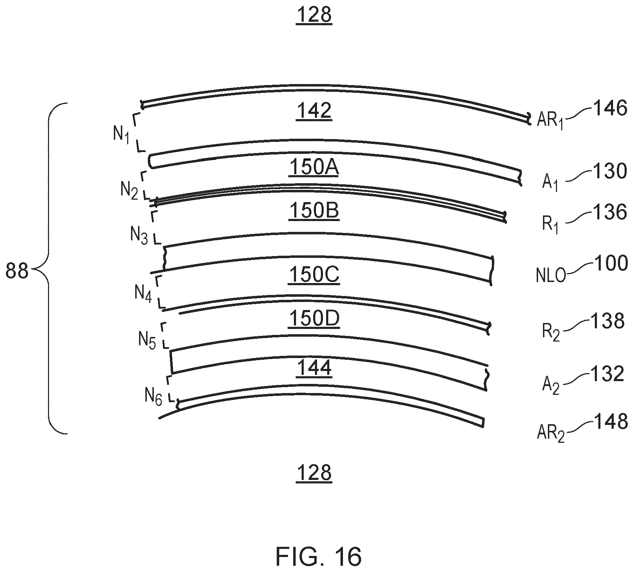

**Figure 16** shows a more complex example layer structure for an AR display panel 88. Air 128 surrounds the display, and this has a refractive index of very close to 1.

The figure shows the distal, outer side of the display panel 88, which is furthest from the eye (also called the 'front' to match the colloquial description of spectacles lenses) which has a surface between air and the display panel. The figure also shows a proximal surface on an inner side of the display panel closest to the eyeball (also called the 'back' to match the colloquial description of spectacle lenses.

Referring to each layer in turn in the distal to proximal direction:

- Layer 146 is a front surface anti-reflection coating (ARC) layer AR_1 to reduce reflections of visible light propagating in the air 128 from the panel-to-air interface. The outer anti-reflection coating layer 146/AR_1 should preferably be anti-reflective over the full visible range of wavelengths to accept light from natural scene sources. Such ARC coatings are routinely deposited on optical elements such as camera lenses. It is also desirable to make this layer 'hard' so as to resist scratches.

- Layer 142 is a front vision correction layer (labelled N1). This is made of an optically transparent material (in the visible) which has refractive power in order to correct for vision defects of the wearer, such as short-sightedness, long-sightedness, astigmatism etc. The vision correction may involve altering the curvature of this layer, or to incorporate a polarizing filter as is common in sunglasses. Alternatively, the layer 142 could be optically neutral, i.e. not provide an image enhancement effect, or be omitted. Another possible function of the back vision enhancement layer 142 is to provide dimming responsive to certain natural light conditions. For example, the vision enhancement layer 142 may incorporate UV-sensitive photochromic material, such as a silver halide, as used in conventional dimming display panels. Another option for dimming would be to use an electrochromic switchable material, as are sometimes used for automatic dimming of rear view mirrors in automobiles. For example, the vision enhancement layer 142 may incorporate tungsten trioxide. For an electrochromic material, an electrical source will be needed to be contacted to the vision enhancement layer 142 to power the dimming function.

- Layer 130 is a front filter layer (labelled A1). The front filter layer absorbs, i.e. is opaque at, the wavelengths of the input beams, which will generally be in the infrared. This will avoid any light from the input beams being emitted out of the front face of the display panel into the air 128. The provision of a front filter layer 130 may be required to comply with laser safety regulations in case one or both the first and second input beams are generated by a laser source. The front filter layer 130 can be made from an organic material with an absorption at appropriate infrared wavelengths. Moreover, it is desirable for the front filter layer to transmit visible light so as not to attenuate natural scene light. Such filters are sometimes known as heat absorbing filters or 'short pass' filters, and can be based on a glass such as Schott KG1. Alternatively the front filter layer 130 can be based on thin film interference effects, which may be suitable when the light of the input beams is highly monochromatic and narrowband, as generated by lasers.

- Layer 150A is a front spacing layer of optically transparent material (in the visible) and is provided to separate the IR absorbing layer 150 from the next layer 136.

- Layer 136 is a front mirror layer for internally reflecting the input beams as they laterally traverse the display panel 88. Provision of the front mirror layer 136 avoids using total internal reflection at the distal panel-to-air interface 146 and also avoids any possible losses, scattering or other undesired effects from the input beams traversing the outer layers 146 to 150.

- Layer 150B is another spacing layer which is optically transparent both in the visible and the infrared (at the wavelengths of the input beams). This spacing layer 150B is provided to increase the thickness of the material traversed by the input beams and thereby reduce the number of internal reflections ('bounces') needed for each input beam to reach the intersection region.

- Layer 100 is a layer of NLO material which, at least in the area which will be covered by the eye's visual field when pointing straight ahead, is quasi-phase matched to the input beams taking account of the angles with which they will cross each other.

- Layer 150C is another spacing layer with similar function and properties to the spacing layer 150B.

- Layer 138 is a back mirror layer for internally reflecting the input beams as they laterally traverse the display element 88 with similar function and properties to the front mirror layer 136.

- Layer 150D is a back spacing layer of an optically transparent material (in the visible and the infrared wavelengths of the input beams) and is provided to separate the back mirror layer 138 from the next layer 1814.

- Layer 132 is a back filter layer that is configured to absorb any stray light from the input beams, i.e. at the wavelengths of the input beams, which will generally be in the infrared with similar properties to the front filter layer 130. The back filter layer 132 thus prevents light at the wavelengths of the input beams from passing into the air 128, thereby protecting the wearer's eye.

- Layer 144 is a back vision correction layer which can have any of the functions or properties as described above for the front vision correction layer 142.

- Layer 148 is a back anti-reflection coating (ARC) layer AR_2 with similar properties to the front ARC layer AR_1/146. Its role is to reduce reflections of visible light propagating in the air 128 from the panel-to-air interface.

One particular advantage of this layer structure is that by confining the optical paths of the input beams to a certain portion of the layer stack between the front and back mirror layers 136-138, vision correction can be applied independently of managing the input beams and generation of the product beam light nonlinear mixing. Namely, vision correction of refractive errors in the eye lens can be achieved in one or more layers that are situated outside the substack 136-138, preferably outside the substack in the distal (front) direction, e.g. in layer 142 as done in the illustrated layer stack. In particular, the optical paths of the input beams can be managed without taking account of any vision correction layers.

It is noted that some of the above layers could be omitted. The anti-reflection coating layers are optional. Moreover, the proximal reflection of the input beams may be performed by total internal reflection from the front panel-to-air interface in which case the back mirror layer would be omitted. Similarly, if total internal reflection is used for the distal reflection of the input beams, the front mirror layer would be omitted. Depending on the nature of the light sources, e.g. whether the input beams are coherent or not, and their wavelengths and maximum output powers, it may also be that the back filter layer could be omitted, or possibly both the back and front filter layers. The front and back vision correction layers are also optional.

It should be noted that additional layers could be added, for example to provide anti-reflection coatings between the different optical materials involved, although it is worth noting that the greatest unwanted reflections are likely to occur between air and the display panel (due to the large index difference to air) and also between the nonlinear layer 100, which, depending on the choice of NLO material might have a quite large refractive index difference.

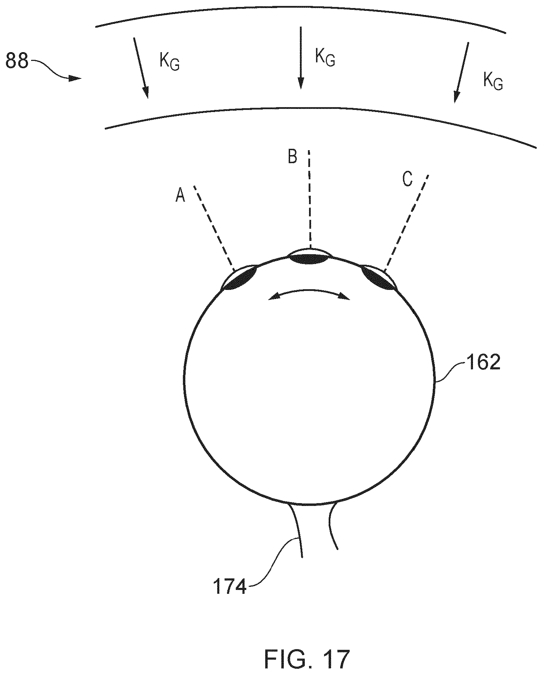

**Figure 17** shows an eyeball 162 which connects to the brain through the optic nerve 174. The eyeball can swivel within the eye socket and thus align its principal optical axis in different directions, for example A, B and C as illustrated. The display panel 88 is constructed in such a way that the quasi-phase matching grating vector Kg varies across the lens so that in all swivel positions of the eyeball, e.g. with its optical axis along A, B or C, the QPM NLO material is oriented so as to create product beam light that will scatter towards the iris. This may be achieved by orienting local sections of NLO material in appropriate positions and orientations within the display panel. Alternatively, this may be achieved by using a display panel with appropriate curvature of its front and back faces. Front and back face curvature will affect both the wavevector direction of the product beam and the paths of the input beams within the display panel. It is noted that depending on how light is introduced into the panel (the relative position within the panel and curvature of the reflecting layers) it may be advantageous to place the Kg in a direction that achieves the optimal local phase matching including the effect of input angles and optic axis.

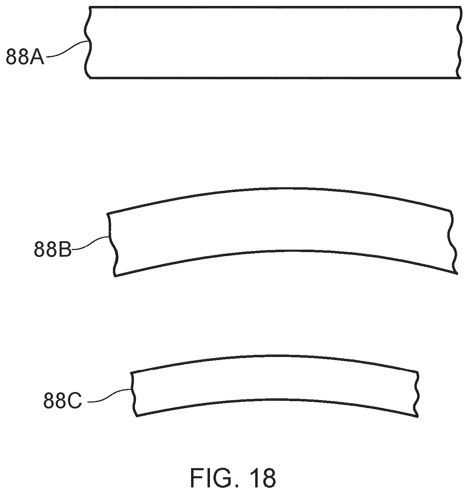

**Figure 18** shows that the display panel can have different shapes. A display panel 88A is planar with parallel and flat front and back faces. This provides input beam paths that are easy to determine. A display panel 88B has front and back faces with the same radii of curvature (i.e. the front and back faces have respective curvatures associated with respective centre points that are offset). A display panel 88C has front and back faces that are curved with different radii of curvature such that both circles have a common centre point, thereby providing a display panel of constant thickness. In all cases, the curvature may be on the surface of a cylinder or the surface of a sphere. Alternatively, there may be different curvatures in two planes to provide more complex curved faces.

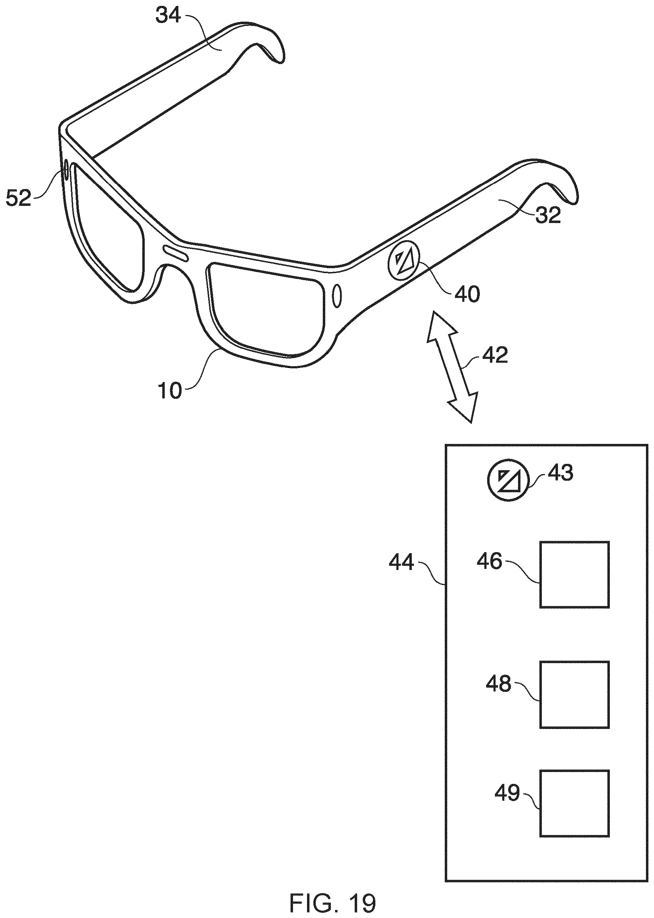

**Figure 19** is a schematic perspective view of a display apparatus in the format of a pair of AR spectacles 10. The spectacles 10 comprise conventional parts including left-hand and right-hand spectacle arms (i.e. temples) 32, 34 and a frame with left and right rims for accommodating left-eye and right-eye lenses. A display panel as described above forms each spectacle lens. The frame including a bridge, nose pad and left-arm and right-arm location points which may be hinged or unhinged. To support its AR functions, the spectacle arms and frame may be modified in comparison to conventional spectacles to accommodate the necessary additional components by internal housing and/or external attachment. These parts may include electronic circuit components, batteries, optical sources and optical elements. A wireless transmitter or transceiver 40 may be included for communicating according to a wireless protocol, such as Bluetooth or a WiFi protocol. The arm-mounted wireless transceiver 40 allows the AR spectacles 10 to communicate wirelessly over a communication path 42 with an external control device 44 which has its own wireless receiver or transceiver 43 as well as a processing capability via a processor 46 as well as associated memory 48 and external network communications 49 which could include WiFi, 4G/5G, optical LAN, wired ethernet, etc. The external control device may also provide location devices, such as via a global positioning sensor (GPS) and position sensing via a map of telecom wireless signals and/or wireless network signals. The external control device may be a dedicated standalone unit specifically for controlling the AR spectacles 10 or it may be a mobile phone, tablet, personal computer etc. running with a suitable app (computer program). In turn, the external control device may be in data communication with further devices and, in particular, may have access to remote computing resources in an ad hoc network (e.g. as provided by cloud computing). Processing intensive tasks for controlling image formation in the AR spectacles may therefore be delegated away from the AR spectacles to the external control device and optionally also more remote computing resources with which the external control device communicates. The processing power on board the AR spectacles themselves, and therefore also the associated power consumption, can therefore be kept low, by confining the processing tasks that are carried out on processors integrated in the spectacles to those which are relatively less processing intensive.

The spectacles frame accommodates left and right side outwardly facing cameras 50 and 52 which face outward to view the natural scene. Using a pair of cameras arranged at the same height side-by-side allows a stereoscopic image to be built up, i.e. binocular vision, similar to that of the eyes of the wearer, thereby allowing distance to natural scene objects to be determined, at least when the distance is relatively short. The spectacle frame 10 further accommodates a range finder, such as a LiDAR device or point cloud imaging system 58, for detecting objects in the natural scene and determining their distance from the wearer. In a LiDAR system, the LiDAR device comprises at least one laser and detector and the time of flight of the laser light from the LiDAR device to a scattering source and back is measured. The laser beam can be scanned to build up a map of objects in the natural scene or multiple laser beams can be generated to allow information to be obtained from multiple points in the natural scene in parallel. The movement of the laser beam as a result of the natural swivelling of the wearer's head can also be exploited to scan the natural scene. In a point cloud imaging system laser beams are projected into natural scene which are imaged by the cameras 50, 52 to allow a model to be built of the geometry of the natural scene. The object information collected by the cameras and range finder, in particular the object distance information, has a particular synergy with AR spectacles according to the invention, since the QPM nonlinear mixing process allows the radius of curvature of the wavefront generated in the wavefronts of the synthetic scene image to be set to a desired value in response to the distance (and position) information measured by the range finder (and cameras). For example, if the augmented part of the image is to superimpose features onto (or wholly replace) an object in the natural scene, then the augmented part of the image can be generated with wavefronts that have a radius of curvature equal to those that they would have if the augmented part of the image was at the measured distance of the associated natural scene object. Similarly, the placement of the augmented, synthetic scene image in the natural scene can be done correctly based on the position information obtained from the cameras. The position and distance information may of course also be combined to aid segmentation processing of the natural scene in order to identify objects therein.

One remote computing resource that may be useful is to provide mapping information that is relevant to the wearer's live view of the natural scene, e.g. as an aid to segmenting the natural scene and also to provide realistic lighting when rendering augmented reality objects. Such mapping information may be from a mapping application, live satellite imaging or live flight tracking, for example.

The level of computing resources that is potentially useful is almost limitless. For example, the computing resources could be used to recreate an entire simulated version of the natural scene in real time based on what is observed by the cameras and range finder in combination with extra mapping information obtained from remove computing resources. The augmented reality objects could then be placed in the simulated version of the natural scene and volume rendered to provide realistic lighting based on textures and so forth.

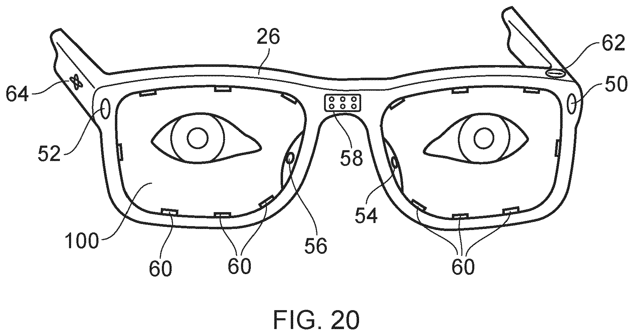

**Figure 20** shows a further view of additional elements that can be combined into a display apparatus in an AR spectacles format.

- 100 is the transparent or near transparent optical element containing the NLO material and the aforementioned IR beams that create the visible light directed to the eye.

- 26 is the frame of the spectacles which together with the arms (temples) accommodate the necessary electronics and optics components.

- 50 and 52 are outward facing left-side and right-side cameras.

- 58 is a point cloud or LiDAR system

- 60 are infrared photodetectors arranged on the rims around the periphery of each lens. A minimum of one photodetector per lens is needed. The infrared photodetectors are provided to detect leakage of light from the input beams, which should be contained substantially wholly within the lenses (and prior to introduction into the lenses in the arms and frame parts of the spectacles). Any measurement of, or increase in, photodetector signal would be an indicator of damage. Damage might be a deep lens scratch or physical damage to the frame or arms which exposes a lens end face. On detection of infrared light leakage, or excessive amounts thereof, the spectacles would be shut down, i.e. the light sources would be switched off, thereby to ensure safety, including laser safety in the case that one or more laser sources are used.

- 54 and 56 are further cameras that are facing inwardly, i.e. towards the eye, are used to track eyeball position. This can be used to help determine the optical image that needs to be transmitted and to ensure that the light is directed only as required to be picked up by the iris. This saves power and thus prolongs battery life. These cameras may also be able to gather information about the stereo vision of the viewer so that the vergence and accommodation conflict can be dealt with as well as to ensure that artificial images are correctly positioned in relation to the natural scene. Importantly, these two cameras can be used to compensate for different interpupillary distances of different viewers (or equivalently interocular distances), and to ensure that the light from the display is directed to the pupil of the viewer's eyes. This has the effect of automatically increasing the eyebox, and overcomes a major difficulty with grating-based or other implementations of AR.

- 62 indicates a magnetic compass element that can be included to help determine the compass direction in which the spectacles, and thus the wearer's head, is facing. Again this information can be processed either in the electronics onboard the spectacles or with remote processing and may be fused with mapping information.

- 64 is a set of accelerometers that can be used to track movement of the spectacles and also determine parameters such as the roll, pitch and yaw angles of the wearer's head assuming that the reference direction for those angles is when the head is held horizontal and with the neck vertebrae untwisted. The accelerometer data can be processed either within the onboard electronics or by external processing in order to track the spectacles motion and thus the wearer's head motion.

Although not shown, the AR spectacles could be provided with an ambient light sensor to measure the overall (non-directional) brightness of the natural environment, such as a photodetector sensitive across the visible region. The output from the ambient light sensor could be used to adjust the overall brightness of the synthetic scene image so that it remains visible in bright light conditions while at the same time not being too bright in low light conditions, such as when in dimly lit rooms or at night.

The inwardly facing cameras can be used to compensate for the different interpupillary distances of different users, and the attendant variation in the eye position relative to the spectacles to ensure correct 3D synthetic scene creation and to ensure light enters the pupils correctly.

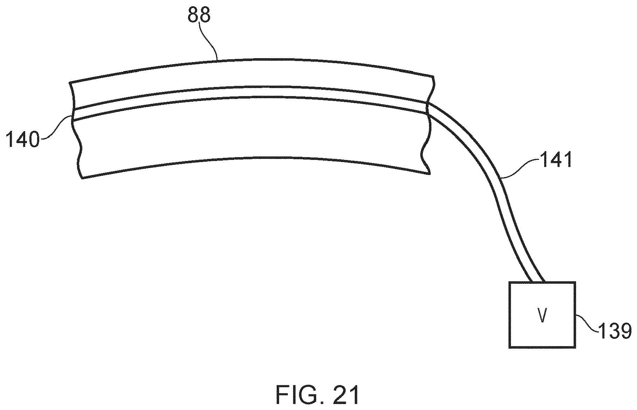

**Figure 21** shows a display panel 88 provided with an additional layer 140 to provide dimming responsive to certain natural light conditions. For example, the dimming layer 140 may incorporate UV-sensitive photochromic material, such as a silver halide, as used in conventional dimming display panels. Another option for dimming would be to use an electrochromic switchable material, as are sometimes used for automatic dimming of rear view mirrors in automobiles, windows in trains and commercial aircraft. For example, the electrochromic material may be tungsten trioxide. For an electrochromic material, an electrical source 139 (either a voltage source or current source) will be needed to be contacted to the dimming layer 140 via a suitable electrical connection line 141 to power the dimming function. Another option for a dimming layer would be a liquid crystal layer with modulatable transmission, which may be pixel based. The dimming effect can be applied across the whole display panel (as in a photochromic lens). Another interesting approach is for the dimming effect to be applied selectively only in certain areas of the image. A simple example would be to form a dark rectangular area to provide a suitable background for a synthetic scene image component displaying written information, which would otherwise be illegible if superimposed on a part of the natural scene that is bright. A more sophisticated example is to provide selective local dimming based on information obtained from the natural scene, specifically objects that have been identified by segmentation of the natural scene using data collected by the spectacle's forward facing cameras and range finder and/or other data collecting sources that may be available, e.g. from vehicle systems in the case of driving a car or flying an aircraft. The local dimming may be exactly coincident with the extent of an object in the natural scene, either to attenuate light from that natural scene object (either entirely or partially), where the local area dimming may be done in combination with insertion of a synthetic scene image in the same local area. There are various examples where it is desirable to attenuate overly bright elements in the natural scene that make it impossible or difficult to view the rest of the natural scene. These include attenuating light from oncoming car headlights, from the sun, e.g. when looking upwards. Another example would be to suppress light pollution when viewing the night sky. Another example is when the AR spectacles are configured as a driver aid for night driving. Here further information from cameras and radar that are part of the car can additionally be included in the image processing. A night vision augmented reality driving experience can be created that is able to reveal or enhance natural scene objects that are usually visible in the daytime but at night are either invisible or too dark to be clearly visible, thereby improving road safety.

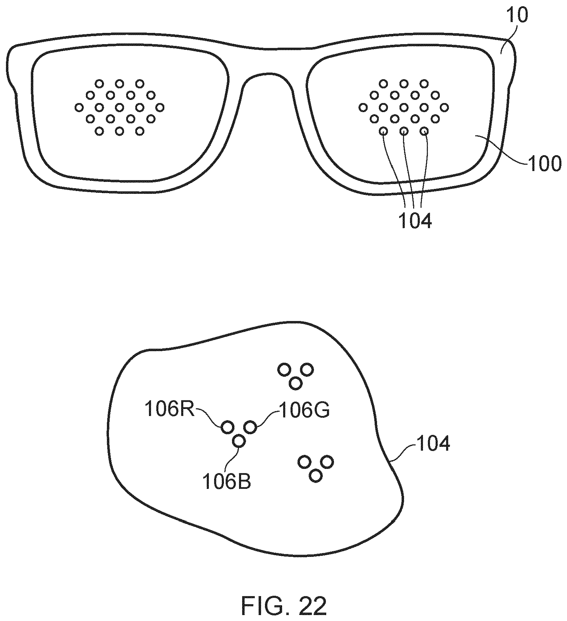

**Figure 22** shows a schematic of a pair of AR spectacles 10 in which the NLO material in the lenses 100 is formed in discrete regions, i.e. spots 104, across the image area, the spots being embedded in areas of material which are either not the NLO material or which is the NLO material but are areas thereof that have not been periodically poled (or otherwise quasi-phase matched to the input beams). Visible light generation is therefore confined to the spots of QPM NLO material with the remaining area between the spots being inactive, i.e. not able to generate any significant flux of visible light by nonlinear mixing of the input beams. As the eye swivels in its socket, it is only necessary to ensure that a quite small amount of synthetic scene image light reaches the eye, and given that the iris can be 4-8 mm across, and the lens surface is only around 12 mm from the eye, the NLO material can be confined to quite small area spots without the image perception degrading compared with full area coverage by the QPM NLO material. In other words, considering the overall area covered by the QPM NLO material, the fill factor of the QPM NLO material may be quite small, e.g. between 5 to 20%. For example, the spots could be circular and 0.3-0.5 mm diameter and distributed in a hexagonal close packed (HCP) grid with a grid spacing of 1-2 mm. The lower part of the figure shows detail in one portion 104 of a lens according to one implementation option for RGB image generation. Each spot is in fact a composite group of three spots 106R, 106G and 106B having different QPM structures so as to generate light in the red, green and blue respectively and thereby allow formation of an RGB image. Alternatively RGB image formation can be achieved when the three QPM structures for red, green and blue are spatially overlaid, i.e. embedded at different depths, $z$, within the lens at the same xy-location. Another alternative for RGB image formation is to perform poling of the NLO material according to a single, more complex poling pattern that phase matches all three colours red, green and blue. There is an advantage in this approach of designing the lenses with a grid of spots where mixing can occur instead of a design with a continuous area of QPM NLO material over the part of the lens where the synthetic scene image is to be formed. Namely, nonlinear mixing, i.e. visible light generation for the synthetic scene image, can only occur at the specific locations where spots exist. This simplifies the beam management, e.g. beam routing and beam modulation, since beam crossing outside the spots will not generate any visible light so can be permitted.

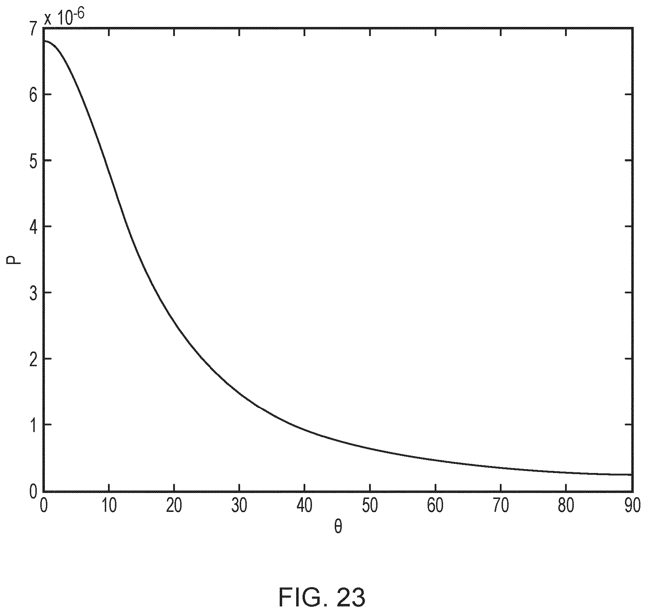

**Figure 23** is a graph plotting the dependency of QPM grating period, P, with angle, $\theta$, the angle being 90 minus the half angle of the reflection from eye axis normal. This example is calculated for the nonlinear mixing of two 1064 nm beams to produce green light at 532 nm. It can be seen that if the traversal of the display panel by the input light beams is by shallow angle reflection (right end of graph) then the required period of the QPM grating becomes quite small which is likely to make fabrication more difficult and less accurate. For example, at 60 degrees (i.e. 30 degrees) the required periodicity is in the UV at about 400 nm and at 70 degrees is about 300 nm. At angles close to the critical angle for total internal reflection, i.e. about 40 degrees for a typical glass-air interface, the grating period is about 800 nm. If the lenses are provided with inner and outer infrared reflective material layers, then the input beams traverse the lenses by mirror reflection enabling larger angle reflections to be used. For example, at a 2 micron grating periodicity, the angle is about 22 degrees. On the other hand, each reflection is a cause of loss, e.g. by scattering, so the best range of angles to choose from is where there is a good compromise between ease (and accuracy) of fabrication and having a shallow enough reflection to keep the total number of reflections needed for the input beams of each beam pair to cross relatively small.

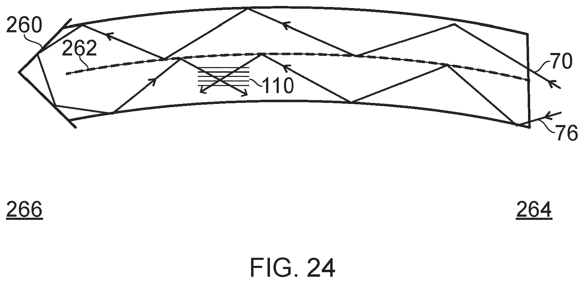

**Figure 24** is a schematic drawing of a structure for introducing the first and second input beams 70, 76 into a spectacle display lens. The first and second input beams 70, 76 are introduced in the spectacle arm or temple side 264 of the lens into respective distal and proximal lens layers in a dual layer lens structure. Each input beam 70, 76 traverses its lens layer. At the bridge side 266 of the lens, the first input beam 70 in the distal layer is reflected back by mirror surfaces 260 (two mirrors at 90 degrees to each other) into the proximal layer so that it counterpropagates with the second input beam 76 to arrive at the desired region 110 for the beams to overlap within a NLO material layer. There is an additional mirror layer 262 within the display element, which is reflective at the infrared wavelengths of the first and second input beams 70, 76. With this design, the first and second input beams 70, 76 are thus brought as desired to cross in the region 110 while being introduced into the same end of the lens, which may conveniently be the temple side as illustrated. It should be noted that other methods could be used to introduce the first and second input beams, including routing around the perimeter of the lens using a suitable light pipe or waveguiding structure. Equally it is not necessary that two separate layers be used (as in the is figure, as it is also possible with a single layer to retroreflect the first input beam 70.

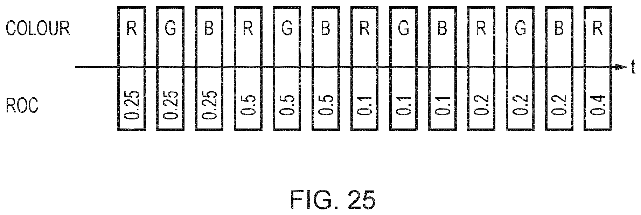

**Figure 25** shows a time-slicing sequence covering both RGB and ROC time multiplexing to generate a single example frame of a synthetic scene image. To form an image frame, a series of time slices are provided over time, t, each time slice being specific to one primary colour - e.g. red, green, blue (RGB) - and one radius of curvature (ROC) - e.g. 0.25 metres. A subframe of three time slices produces a synthetic colour image at one ROC. To generate a colour synthetic scene image containing objects at multiple distances in the scene, multiple such subframes are required, one for each ROC. In a full frame, synthetic subimages are formed at multiple different perceived depths in the synthetic scene. By sequentially displaying the relevant display fields, it is therefore possible to build up a convincing white light effect and render any colour, as in conventional displays such as projectors based on RGB. The example radii of curvature shown are 0.25 m, 0.5 m, 1.0 m, 2.0 m and 4.0 m. In this example they are shown in a monotonically increasing sequence which will then repeat. However it will be understood that any given frame may use an arbitrary sequence of time slices. Indeed sequences other than that shown may be more efficient to generate by the hardware and/or generate images that are perceived to have higher quality by human vision. The five example ROC values shown has the smallest ROC value at 0.25 metres, which is approximately equal to, or just below, the near point of normal vision. This value enables very near, and even slightly too near objects to be displayed in focus. The largest distance in this example is 4 metres, which is effectively the same as large distance (or infinity) for the normal eye in monocular vision. It will be understood that a smaller or greater number of distances may be chosen, and also that it is possible to adaptively control distance and frame. Moreover, the number of ROCs per frame may be varied according to the synthetic scene content, e.g. may be reduced or increased as certain objects leave or enter the synthetic scene. As previously discussed, the ROC value is set using the nonlinear mixing process and varying the crossing angles of the first and second input beams.

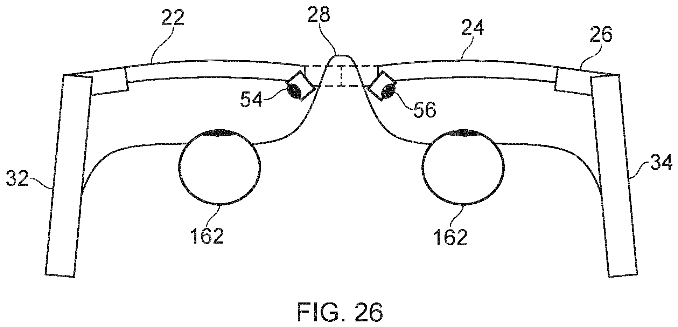

**Figure 26** shows a schematic cross-sectional view of a spectacle-format system comprising the standard components of a spectacle frame 26 accommodating left and right eye spectacle lenses 22, 24 separated by a nose bridge 28 and having left and right spectacle arms (temples) 32, 34. In this embodiment, left and right inwardly facing cameras 54, 56 are mounted on or adjacent the nose bridge 28 for capturing images of the left and right eyes 162, which are shown in cross-section through the eyeballs. The inwardly facing cameras 52, 54 are illustrated located at the nose side of each lens. However, it will be understood alternative placements could also be used, e.g. at the temple side of each lens. The function of the inwardly facing cameras 54, 56 is to track the direction of gaze of the person wearing the AR spectacles. The provision of inwardly facing cameras for eye tracking allows for a number of advantageous features and functionalities to be provided. Firstly, the position of the pupil (and hence the gaze) allows the system to illuminate the appropriate region of the display so that the viewers sees the image in the correct place. By means of the external facing camera and the information from LiDAR or other pre-determined scene information, plus location and orientation (from the compass, or accelerometers) the appropriate artificial scene information can be displayed. Secondly, the eye position can be used to create a high resolution image which will be received by the foveal region of the retina, which is the part of the eye with highest resolution. Thus a limited number of spatial pixels on a modulator or emitter array can be used to create a high resolution image, and then, when the eye gaze shifts, the input beams can be steered to a different region of the spectacle display lens, and in that new position generate a high resolution image. It should be noted that in terms of creating a compelling synthetic scene it may also be helpful to display information (with lower resolution but the correct colours and intensity) into the more peripheral parts of the visual field (by appropriate beam steering into the other regions of the lens). A third feature of eye tracking is that it can be used to dim or extinguish the synthetic scene as the eye shifts gaze (over larger angles) so that unwanted ghost images are not perceived by the viewer. A fourth advantage of eye tracking by means of the inwardly facing cameras 54 and 56 is that they can ensure that all generated light is directed towards the pupil of the eye, both increasing electrical to visual efficiency for the display, but also to avoid visible light being directed onto other parts of the viewers eye (or elsewhere on their eye lids or surround skin) which can be perceived by another person looking at the wearer of the AR spectacle display system. A fifth advantage of eye tracking is that the system can adapt to compensate for different interpupillary spacing (separation between the eyes). As the eye spacing of different people can vary it is advantageous to be able to have system adapt to steer light towards the eye of the individual. This may be achieved by altering the input angles of the two beams into the NLO material so as to steer the wavefront direction of the emitted light.

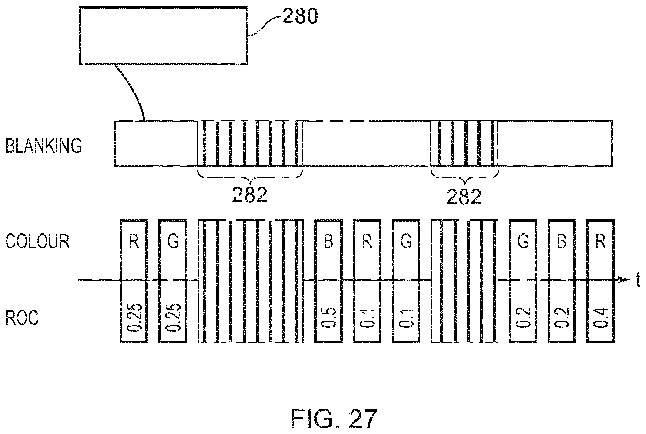

**Figure 27** shows a time-slicing sequence covering RGB and ROC time multiplexing to generate a single example frame of a synthetic scene image which additionally includes saccadic movement blanking periods 282. When the system is blanked, the illumination (either one or both of the input beams) are switched off or switched to low intensity so that during the blanking periods no synthetic scene image is formed. The decision on when to blank is made by a control system 280 which carries out signal processing based upon eye tracking information obtained from the inwardly facing cameras 54, 56. The purpose of the blanking is so that when the eye is swivelling no light is sent to the eye. This avoids unwanted ghost images and streaks on the visual field. This is particularly important in a pulsed system as the pulsing can cause transient images to be projected across the retina. Pulsing may be present either because one or both beam sources are pulsed, e.g. pulsed lasers, or because of a pulsing effect caused by the time slicing of the colour and radius of curvature RGB, ROC.

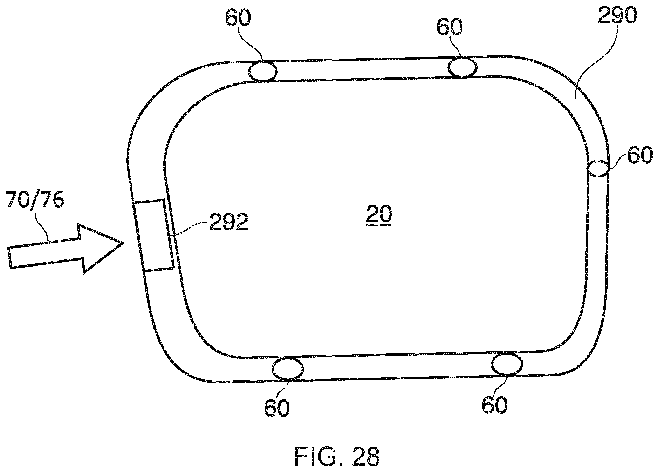

**Figure 28** shows an absorbing layer arranged in a peripheral region of a display element lens through the example of a spectacle lens 20. The spectacle lens 20 is surrounded by an absorbing material region 290 which is placed there to absorb input beams beams after they have crossed in the NLO material and reached the peripheral region, thereby stopping further propagation of the input beams by reflection from the lens edges after the input beams have served their purpose. The absorbing material may advantageously have a similar refractive index to the material of the lens (to avoid Fresnel reflection) while incorporating an absorbing function through molecular absorption, absorption by a dye, or absorption by black absorbing particles. The same design may be used for display panels of other format, e.g. large area displays for conferencing or a single panel for both eyes as may be used in a VR headset format. These designs have in common that there is a peripheral region containing a material that is absorbent to light at the first and second frequencies so that the first and second input beams are absorbed after the first and second paths have crossed each other in the NLO material when they reach the peripheral region. There are also photodiodes 60 arranged at the periphery of the lens 20, which, as previously described, can be used to check the integrity of the lens structure and provide a switch-off safety feature in the event of damage. The lens periphery also includes a non-absorbing region 292 through which the input beams 70/76 are injected into the lens 20, i.e. the absorbing material region does not extend fully around the periphery of the lens 20.

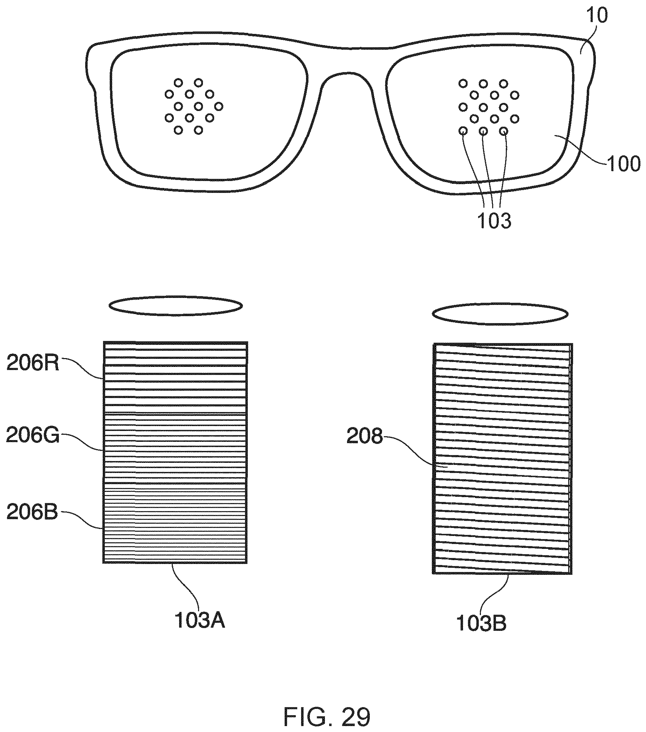

**Figure 29 (upper part)** shows a schematic of a pair of AR spectacles 10 in which the NLO material in the lenses 100 is formed in discrete regions, i.e. spots 104, across the image area, the spots being embedded in areas of material which are either not the NLO material or which is the NLO material but are areas thereof that have not been periodically poled (or otherwise quasi-phase matched to the input beams). Visible light generation is therefore confined to the spots of QPM NLO material with the remaining area between the spots being inactive, i.e. not able to generate any significant flux of visible light by nonlinear mixing of the input beams. As the eye swivels in its socket, it is only necessary to ensure that a quite small amount of synthetic scene image light reaches the eye, and given that the iris can be 4-8 mm across, and the lens surface is only around 12 mm from the eye, the NLO material can be confined to quite small area spots without the image perception degrading compared with full area coverage by the QPM NLO material. In other words, considering the overall area covered by the QPM NLO material, the fill factor of the QPM NLO material may be quite small, e.g. between 5 to 20%. For example, the spots could be circular and 0.3-0.5 mm diameter and distributed in a hexagonal close packed (HCP) grid with a grid spacing of 1-2 mm. There is an advantage in this approach of designing the lenses with a grid of spots where mixing can occur instead of a design with a continuous area of QPM NLO material over the part of the lens where the synthetic scene image is to be formed. Namely, nonlinear mixing, i.e. visible light generation for the synthetic scene image, can only occur at the specific locations where spots exist. This simplifies the beam management, e.g. beam routing and beam modulation, since beam crossing outside the spots will not generate any visible light so can be permitted.

**Figure 29 (lower left part)** shows a first way to realize each spot. Namely, a spot 103A is comprised of a stack of three different QPM periods, 206R, 206G and 206B respectively, designed to phase match the appropriate nonlinear mixing processes for generating three different wavelengths, e.g. red, green and blue light wavelengths respectively. In the illustration the layers are shown as being in contact (as could be achieved by electric field poling), but it will be understood that gaps of inactive material could be interspersed.

**Figure 29 (lower right part)** shows a second way to realize each spot. Namely, a spot 103B is realized as a superstructure grating 208, which is designed so that it can simultaneously phase match for three colours, e.g. red, green and blue. This can be fabricated by poling of the NLO material according to a single, more complex poling pattern that phase matches all three colours red, green and blue. The superstructure grating is also illustrated with its layers being tilted slightly away from the plane of the NLO material layer. The grating for each spot may be tilted in a way that varies from spot to spot over the lens area so as to direct the phase matching output beam towards the pupil - as was described further above with reference to Figure 17. The same local tilting approach may be used for the multi-stack spot 103A described above.

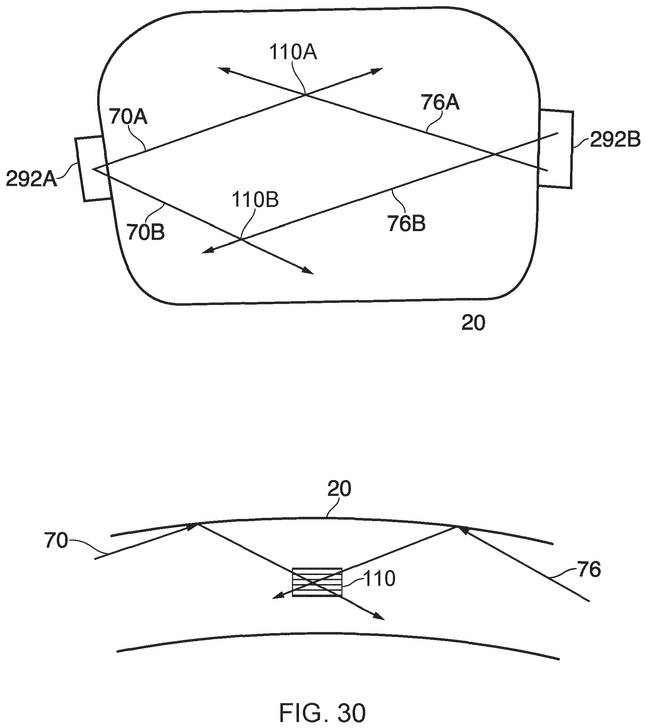

**Figure 30** shows two schematic views of a spectacle lens 20 for AR spectacles. The upper portion shows a front view of a lens 20, while the lower portion of the figure shows a top view, ie a view which is a section through the lens. In the front view, the first and second input beams 70A, 70B and 76A, 76B enter the lens 20 from left and right sides thereof respectively through entry regions 292A and 292B. The first and second input beams 70A, 70B and 76A, 76B cross at two different crossing positions 110A and 110B. As the eye behind the lens swivels, the gaze will be directed to many such places and it is necessary that synthetic scene information be created that will be received by the pupil of the eye. In this example, the crossing position 110A involves the gaze directed upward, and the crossing position 110B involves the gaze directed downward. Two different arbitrary first input beam directions 70A, 76A and two different second input beam directions 70B, 76B are shown by way of example. The lower portion (top view) is a slice through the lens showing the bouncing paths. It will be appreciated the respective crossing angles in the nonlinear overlap regions 110A and 110B need to be considered in three dimensions, as is clear from considering the front and top views in combination, where the input beam injection directions shown in the front view and the traversal of the lens by bouncing are relevant. From the diagram it will be appreciated that the vector directions crossing at a given point on the lens 20 depends on the position on the lens at which the gaze is directed. The resultant wavefronts need to be directed to the viewer's pupil, and so the phase matching diagram (which is now 3-dimensional vectorial) must be designed so that the light is appropriately directed. This can be achieved by setting the QPM direction in an appropriate orientation across the face of the lens so that phase matching in desired directions can be achieved.

It should be noted that, although the phase matching periods and QPM grating vector will be determined in manufacturing the lens, there are still degrees of freedom that can be controlled to ensure that the resulting light from the NLO process is directed to the eye. The first of these is that, at a given crossing position 110A or 110B, the bouncing angles $\theta$ (see Figure 10) of the first and second input beams can be independently controlled. Secondly, the wavelengths of the first and/or second input beams can be altered somewhat to change the phase matching condition, although this would require that at least one of the beam sources be tunable. As already discussed, by using the inwardly facing cameras it is possible to ensure that the light from the system is directed towards the pupil efficiently and to adapt to differing interpupillary distances. As illustrated, the spectacles can be configured so that the beams enter each lens at intermediate height positions 292A and 292B from opposing sides of each lens. The beams are then directed to cross at different positions 110A and 110B as required. As just discussed, to ensure light is directed efficiently from lens-to-pupil of the wearer it is required that the QPM grating vector be set locally at crossing positions 110A and 110B so as to ensure phase matched wavefronts (or nearly phase matched wavefronts) travel to the pupil, i.e. so that the wavefronts have appropriate wavevectors.

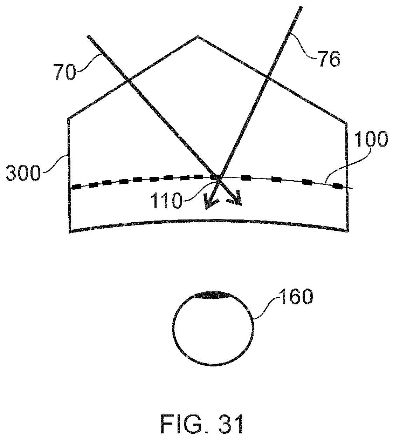

**Figure 31** shows an example lens 300 suitable for VR goggles. The lens 300 has embedded therein an NLO material layer 100. The first and second input beams 70 and 76 enter the lens 300 from the distal side, which is possible for VR where there is no natural scene to transmit onto the eye, and cross in the NLO material layer 100 at an intersection region 110. The injection of the input beams from the distal side of the lens 300 is also facilitated by the fact that, in VR, the lens 300 can be made much thicker than is possible for AR. The thickness of the lens 300 may for example be 50 mm. The illustrated form of the lens 300 is a roof shape with first and second sloping facets whose surfaces form an approximate orthogonal angle with the first and second input beams 70, 76 at the points of injection. The other features of the system remain the same as previously discussed for end injection of the input beams with a bouncing traversal to arrive at the intersection region where the input beams cross.

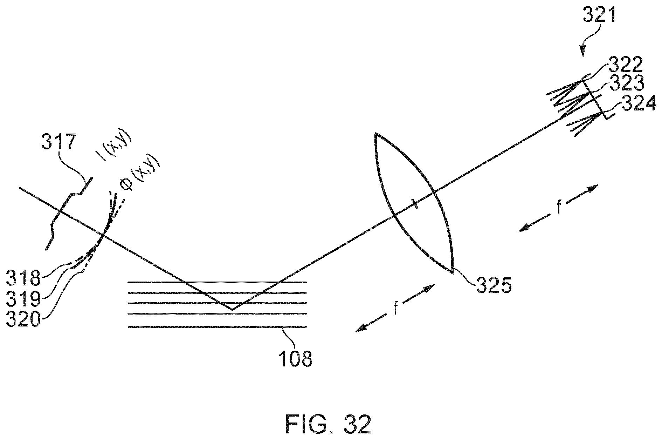

**Figure 32** schematically shows image generation in a NLO material layer having a nonlinear QPM grating 108 when the first input beam source is an incoherent emitter array 321 that emits multiple objects as incoherent infrared light (such as from a monochromatic microLED array), thereby acting as the first input beam. A lens 325 is arranged midway between the emitter array 320 and the QPM grating 108 one focal length, f, away from each. Three emitting regions are shown as pixels 322, 323 and 324. Each of these has the same radius of curvature. An input infrared laser wave 317 acting as the second input beam and having an intensity profile and a phase profile (corresponding to radius of curvature) is shown coming into the QPM grating 108 (from the left). The input laser wave 317 can be given three different radii of curvature 318, 319 and 320 at different times. By altering the ROC of the input laser beam from the left and by providing different intensity patterns from the microLED incoherent emitters, it is possible to create successive wavefronts that can be rapidly cycled in sequence so that the viewer perceives different objects to exist at different apparent focal positions in the visible nonlinear wave emitted from the QPM grating 108 as a result of the nonlinear mixing of the input beams.

## SUMMARY OF OPTIONS FOR PHASE & AMPLITUDE MODULATION BETWEEN BEAMS

In the following, we summarize possible approaches for carrying out the amplitude and phase modulation functions, in particular in respect of whether both are applied to one of the input beams or one to each of the input beams as well as whether the beams are large area beams (or equivalent beam arrays as generated by an array emitter) or rastered pencil beams. While the following aims to provide a comprehensive overview of the options, it is not exhaustive and further variations will be readily understood, e.g. by combining elements from the following specific examples. It is also noted that the labelling of the two input beams as Beam 1 and Beam 2 is arbitrary.

Table A: Example approaches for amplitude modulation

| Description | Beam 1 | Beam 2 | Example of modulation approach | Comment |
|---|---|---|---|---|
| Ai) Raster scanned whole beam approach | Amplitude modulated across whole beam | Phase modulated (see Table B) | Laser current drive, or electro-optic modulator, or uniform liquid crystal modulator | Modulation can be made in reflection or transmission. |
| Aii) Laser like beam with complex amplitude modulation across beam | Required amplitude pattern is imprinted onto the whole input laser beam | Phase modulated (see Table B) | Requires a 2D modulator (e.g. LCOS in reflection, or liquid crystal in transmission, or DLP type MEMs array | Note the amplitude on the beam must be such as to create a virtual image for the eye. The amplitude modulator may operate in either reflection or transmission |
| Aiii) Emitter array | Beam 1 is a 2D array of individual beams created by an emitter array in a 2D modulated manner | Phase modulated (see Table B) | Micro LED array or OLED array, with the amplitude set using drive current to individual pixels | The emitter array can be incoherent (e.g. in an OLED or micro-LED display) or can be coherent (such as an array of VCSELs) but with amplitude control |
| Aiv) Composite modulator array / emitter hybrid | Beam 1 is a 2D array of individual beams created by a hybrid modulator-and-emitter array in a 2D modulated manner | Phase modulated (see Table B) | Similar to the preceding but the emitter function and the modulation function are created via a hybrid or composite approach. For example, by placing a liquid crystal modulator directly onto an LED array, or similar | |

(continued)

| Description | Beam 1 | Beam 2 | Example of modulation approach | Comment |
|---|---|---|---|---|
| Av) Combined phase and amplitude | Beam 1 is both amplitude and phase modulated and delivered to the NLO interaction region | Beam 2 is an unmodified laser beam delivered to the NLO interaction region | See Table B for examples of approaches for phase modulation | The device might comprise a hybrid structure modulating phase and amplitude together in the same modulator, or phase and amplitude modulation may be applied successively by dedicated modulators to a single one of the input beams. |

Table B: Example approaches for phase modulation

| Description | Beam 1 | Beam 2 | Example of modulation approach | Comment |
|---|---|---|---|---|
| Bi) Spatial phase modulation across laser like beam | Modulated as per Table A | Spatially varying phase modulation to create required radius of curvature | A Pockels cell type device with a radially varying electric field to create a quadratic phase across the beam or a transmissive LC phase modulator | This example is in transmission and could use materials such as KTP, BBO, KDP, KTN, LiNbO3, or organic electro-optic materials |
| Bii) Spatial phase modulation across laser like beam (II) | Modulated as per Table A | Spatially varying phase modulation to create required radius of curvature | An LCOS mirror device comprising an appropriate liquid crystal layer with locally addressable electric field strengths | Such a device would typically operate in reflection, e.g. with the liquid crystal placed on a reflector and addressed per pixel. A transmissive device may however be used instead. |
| Biii) Spatial phase modulation across laser like beam | Modulated as per Table A | Spatially varying phase modulation to create required radius of curvature | Examples would include MEMS based deformable mirror or locally thermally deformed mirror | Typically the device would operate in reflection. |
| Biv) Combined amplitude and phase | Modulated with both amplitude and phase modulation across a beam | Unmodified laser beam delivered to the NLO interaction region (steered in location only) | As discussed in Table A, by creating a hybrid/composite element | The same as Aiv) but with the roles of the two beams swapped |
| Bv) Diffractive control of ROC | Modulated as per Table A | Altering the intensity across Beam 2 and then using diffraction effects to alter the ROC | An amplitude modulator is used to spatially control the extent of a beam so as to increase or decrease the effect of diffraction. Spatially varying amplitude modulators could be used (eg LCOS or DLP or a variable diameter iris).[1] | Compensatory changes to overall beam intensities will be needed if one beam is apertured in this way. The diffractive control may be done in transmission or reflection. |

(continued)

| Description | Beam 1 | Beam 2 | Example of modulation approach | Comment |
|---|---|---|---|---|
| Bvi) Gaussian beam optical control of ROC | Modulated as per Table A | Altering the focal lengths / relay optics to alter the spot size and input ROC | Variable zoom lens type elements, or liquid filled lenses, or quadratically shaped electro-optic or liquid crystal elements with electric field drive | |
| [1] More complex approaches can make use of Fresnel zone plates with the advantage of being able to use an absorptive spatial modulator and exploiting the coherence of the laser like input beam | | | | |

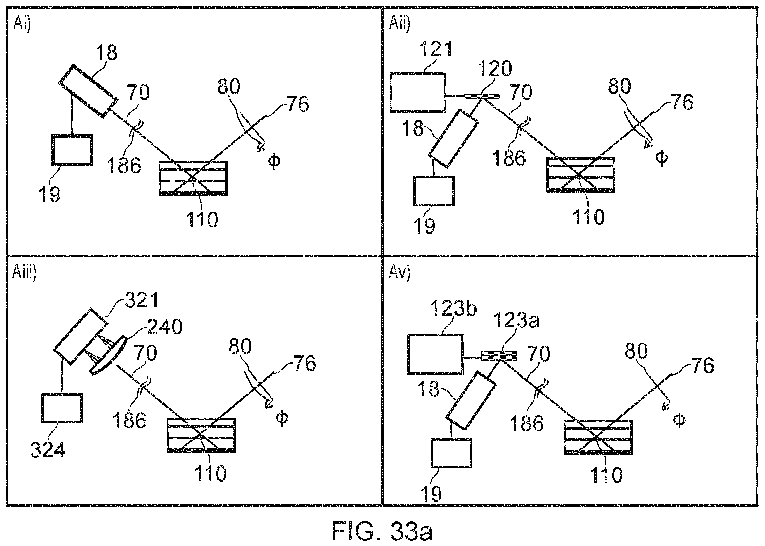

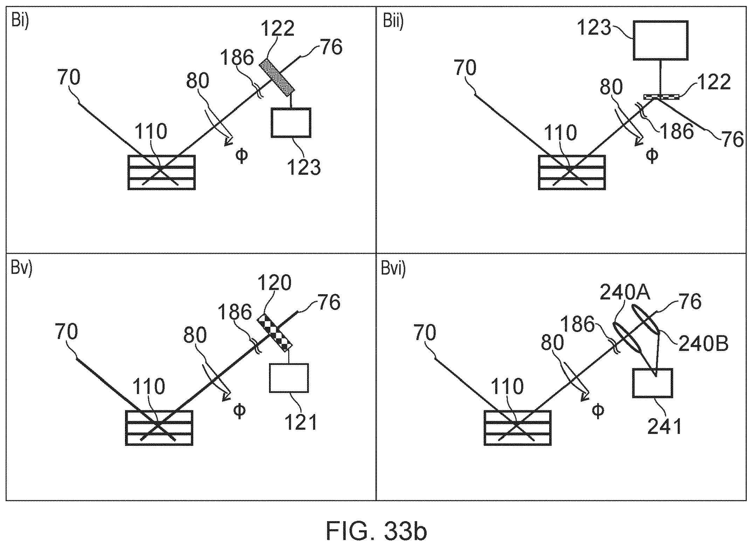

**Figure 33a** shows a series of panels illustrating certain ones of the approaches summarized in Table A for controlling the amplitude and phase of the two input beams. The panels are labelled with references that are taken from the corresponding row of Table A. It will be understood in the following that the two beams here are labelled for convenience with 70 for the beam coming from the left to the interaction region 110, and labelled 76 for the beam coming from the right, but of course the directions of the beams may be swapped so long as the beams cross in the appropriate overlap region 110. It may also be convenient to design the system so that, for the right and left lens, the system is mirror symmetric, so as to maintain symmetry across the spectacles. For example, in both spectacle lenses one of the input beams (e.g. the first input beam carrying phase modulation) is injected from the bridge side whereas the other input beam (e.g. the second input beam carrying amplitude modulation) is injected from the temple (or arm) side.

**Figure 33a at Panel Ai)** shows a scheme appropriate to a raster scanned and whole beam modulated approach. It shows two beams 70 and 76 that interact in a nonlinear region 110. The first beam is emitted from a laser 18, which is driven by a laser controller unit 19. The laser controller unit provides electrical power to the laser, and by varying the current the output power can be modulated as the beams are scanned in angle to build up an image. The figure shows a discontinuity 186 to indicate that there will be other optical elements placed in the optical path (for example to scan angle, etc). In this implementation the power of the laser beam 70 is controlled by the laser controller unit 19. The second beam 76 is shown with a phase profile 80 appropriate for controlling the radius of curvature of the resultant nonlinear beam (not shown). As discussed in Table A, the intensity of the whole beam 70 can also be controlled by placing a modulator in the beam path. The modulation element can be either transmissive or reflective.

**Figure 33a at Panel Aii)** shows a beam created by a laser with a complex amplitude modulation imprinted across the beam. This differs from the previous example, where the intensity of the whole beam is modulated, because the intensity across the beam is varied using a spatial light modulator. The figure shows two beams 70 and 76. The first of these 70 is amplitude modulated by a spatially varying reflective amplitude modulator 120 (for example a reflective LC based spatial light modulator). The figure shows an amplitude modulator controller 121 which is connected electrically to the modulator 120. This example also shows the laser 18 and the laser controller 19. The laser controller can control the total amount of light in the beam, while the modulator controller 121 drives the modulator 120 to create a spatially varying intensity profile across the laser beam. As before, the discontinuity 186 indicates that other optical elements will be present in the beam path of 70. All of the controllers elements are controlled by a central controller which controls the image formation (not shown). The second beam 76 has a controlled phase profile 80.

**Figure 33a at Panel Aiii)** shows a system in which the amplitude modulated light is created from a device with multiple separate emitters (such as a Micro-LED device). In this approach the first beam 70, is created from separate pixel emitter sources from the emitter array 321. The emitter array is driven and controlled by a separate controller 324 which sets the intensity of each emitting element. The light emitted from two pixel positions are shown. Note that in general the array will be a 2 dimensional array. In the diagram the light emitted from the emitter array 321 is shown to be diverging (as would be the case with a Micro-LED device) and a lens 240 is placed to collect the light and direct it into the first beam 70 direction. It will be appreciated that the first beam 70 is no longer like a laser beam, rather it is radiation emitted by the emitter pixels and directed by an optical system to the interaction region 110. The emitter array can be either incoherent between pixels such as would be the case with a Micro-LED array or could have coherence between pixels (such as would be the case if a single large laser spot were to have an amplitude modulator placed on its emitting surface). Alternatively an array of emitting lasers (such as a VCSEL array) could be used, and again could either be coherent or incoherent between each emitter. (note that a VCSEL is a vertical cavity surface emitting laser.) Provision of a hybrid or composite emitter is described in Table A as example Aiv), which describes placing a modulator (such as a liquid crystal modulator) onto the emitting surface of a larger emitter (such as a laser or LED).

**Figure 33a at Panel Av)** shows a combined phase and amplitude modulator. This example is a variant of the example shown in Panel Aii. A laser 18 and laser controller 19 are shown. The light from the laser is reflected off a combined amplitude and phase modulator 123a. This is controlled by a controller 123b which imparts both amplitude and phase information onto the first beam 70. The combined amplitude and phase modulator 123a can either be a single device for example a modified LCOS device with a phase controlling layer, or it can be implemented using separate elements in proximity. Again the device may operate in either transmission or reflection. The second beam 76 no longer has any controlled phase imparted across it because the function of altering the radius of curvature of the emitted light is now achieved by applying the phase information to the first beam 70. Thus the phase 80 is now flat across the beam. However, this beam may still have some more complex phase function (e.g. it could be focused) but is not modulated as the image is produced to create the radius of curvature.

**Figure 33b** shows approaches to controlling the phase across a beam according to Table B. It shows a series of panels illustrating different approaches. The panels are labelled with references that are taken from the corresponding row of Table B. The panel schematics concentrate on illustrating the role of the second beam (labelled 76 in the figures) but it will be understood that the labelling of the first and second beams as 70 and 76 is arbitrary. Similar to the description of Figure 33a it will be recognized that it may be convenient to construct a system in which there has mirror symmetry in the left and right lens of a particular display apparatus (AR spectacles).

**Figure 33b at Panel Bi)** shows a pair of beam 70 and 76 the interact within a nonlinear region 110. The first beam (that coming from the left) is labelled 70 and is the one that is amplitude modulated as per Figure 33a and Table A. The second beam 76 is the beam that comes from the right hand side. It is shown as passing through a transmissive spatial phase modulator 122 which imparts a desired spatial phase profile on the beam 80. There is a discontinuity in scale 186 which indicates that other elements may be added to the optical path. The spatial phase modulator 122 is controlled by a phase modulator controller 123 which is used to create a phase pattern corresponding to a diverging beam so as to alter the radius of curvature of the emitted light from the NLO region 110, and thus create the appearance of differing focus to the viewer of the display device.

**Figure 33b at Panel Bii)** is similar to Bi) except that the second beam 76 is reflected from a phase modulator 122, which is similarly controlled by the spatial phase modulator controller 123. The phase modulator 122 could, for example, be a deformable MEMs mirrors, could be a liquid crystal (LCOS) type device, or a thermal distorted mirror element. Note that the example Biii) from Table B is not shown in figures due to the similarity to the Bii) configuration.

**Figure 33b at Panel Biv)** from Table B is not shown either because it involves combining amplitude and phase modulation into a single hybrid element and is the same as for example Av.

**Figure 33b at Panel Bv)** illustrates a diffractive intensity modulation approach to altering the radius of curvature of beam 76. It looks superficially similar to Bi except that the modulator is now a spatially controlled intensity modulator 120. In this diagram it is shown in transmission but it will be understood that the same could be achieved in reflection. The intensity modulator 120 is controlled by an intensity modulator controller 121. In the simplest configurations the radius of curvature (equivalent to phase profile 80) of beam 76 could simply be altered by transmission through an aperture (for example a pinhole) of controllable width. By reducing the size of the aperture, the beam divergence will increase due to diffraction. Equally, a transmission pixel controlled aperture (e.g. a liquid crystal device) can create a transmissive pattern (eg a pin-hole) that will also increase diffraction as required. A more elegant approach would be to use a Fresnel Zone plate pattern as this would be more light efficient.

**Figure 33b at Panel Bvi)** shows a system based around altering the properties of the laser like beam 76 so as to control the phase 80 across the beam 76 (equivalent to radius of curvature) so as to create an output of the nonlinear interaction region 110 which creates a desired image depth for the display device. The figure shows a pair of lenses 240A and 240B which are used to create a beam expanding telescope. The two lenses are controllable (by a controller unit 241) which acts to modify the resulting optical power of the pair of lenses. This can be achieved in many different ways including liquid lens, or by altering lens spacing by moving an element (such as in a zoom lens on a camera). It will be understood that different numbers of lenses could be used, and choice will be based on desired technical performance. Altering the size of the beam 76 (which will propagate over some distance (and other optical elements represented by 186) will result in diffractive spreading as is well known for Gaussian beam optics. Thus the radius of curvature (phase) of the beam will be controlled.

## EXAMPLE CONTROL SYSTEM INPUTS, OUTPUTS AND FUNCTIONS

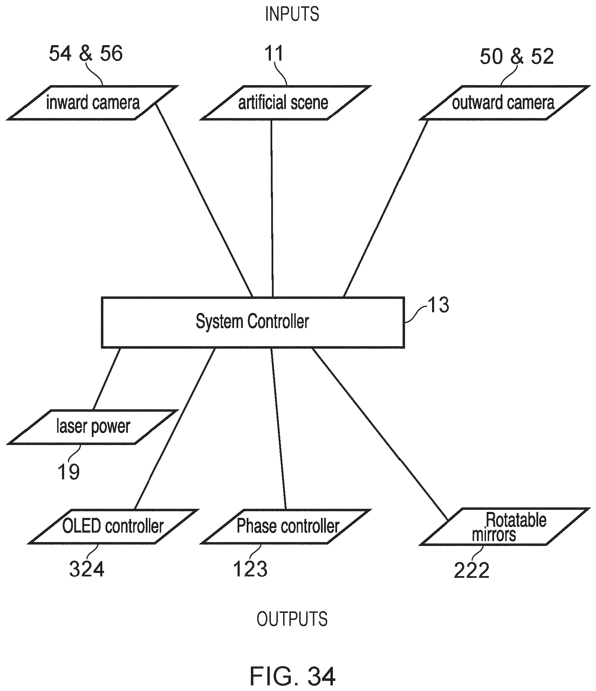

**Figure 34** shows a simplified schematic block diagram of a controller for a display system as described above. The controller 13 is shown having three prime inputs, namely image data of the desired artificial scene information 11, eye monitoring data from the inward facing cameras 54 & 56 and image data of the natural scene from the outward facing cameras 50 & 52. The controller 13 takes information from the natural scene using the external cameras 50 &52 to determine where the artificial scene information should be located 11. The internal facing cameras 54 & 56 are used to determine where the eye gaze is directed which in turn is used to derive where on the display element the overlapping input beams should be directed to overlap in the NLO material. The figure also shows the primary outputs of the controller 13 which are: the laser power 19 for the radius of curvature determining beam; the OLED controller 324 to create the intensity structured beam; the phase controller 123 (which sets radius of curvature / phase across the laser beam); and outputs to control input beam manipulating optical elements for steering and focusing the input beams, e.g. the rotatable mirrors 222. It will be appreciated that the system described is simplified and in more complex configurations other information will be incorporated, such as accelerometer data, magnetic compass data, LiDAR data, etc.

By way of example a display system as described herein may have any combination or selection of the following inputs, controller functions and outputs.

Inputs:

Any of the following inputs and associated controller input interfaces may be provided.

- WiFi or 4G/5G connection to internet
- Bluetooth or equivalent (wired, wireless or optical)
- Accelerometers and magnetometers
- Front facing cameras
- Rear facing (eye tracking) cameras
- Integrity sensors photodiodes
- Information to determine synthetic scene including locally derived and that received from external network
- Coordinates and geometry of local space (locally broadcast or from memory)
- Lidar / 3D mapping information
- Calibration data from installation protocols
- Light scatter from eye viewed by inward camera

System Controller Functions:

Any of the following functions may be subsumed in the controller.

- Determination of synthetic scene from external and internal sources
- Determination of local geometry and feature identity
- Memory and signal processing
- Current eye gaze angle
- Eye separation & other ocular properties, eye dominance, blinking, etc.
- Calculation of overlap angles and phase control
- Intensity modulation calculation
- Determining display integrity
- External light levels
- Calculation of need to block real-scene light block

Outputs:

Any of the following outputs, which may be considered as control signals, and associated controller output interfaces may be provided.

- Positional, rotational and acceleration data to external users
- Camera outputs to external processing
- Controller for first beam & controller for second beam
- Amplitude modulation
- Phase modulation for setting radius of curvature
- Colour modulation
- Steering optics to direct beams to desired spot
- Control of photochromic real-scene light blocking

**WAVELENGTH COMBINATIONS**

For a colour display it will be necessary to provide red, green and blue light. Assuming the nonlinear process is three beam SFG, the frequencies of the two input beams must sum to the frequency of the desired colour of the product beam. There are a plethora of available laser and non-laser sources which provide almost limitless possible combinations of two frequencies that sum to red, green and blue.

One example combination is:

| 1064 nm | + | 1550 nm | = | 630 nm (red) |
|---------|---|---------|---|--------------|
| 1064 nm | + | 1064 nm | = | 532 nm (green) |
| 1064 nm | + | 780 nm | = | 450 nm (blue). |

This example also shows a practical approach to reduce the number of source wavelengths that are needed. In this example, only three different wavelengths (frequencies) are used, i.e. fewer than two per colour.

A second example combination is:

| 1064 nm | + | 1560 nm | = | 632.5 nm (red) |
|---------|---|---------|---|----------------|
| 1064 nm | + | 1064 nm | = | 532 nm (green) |
| 1064 nm | + | 780 nm | = | 450 nm (blue). |

This example shows a further approach to reduce the number of source wavelengths that are needed. In this example, only two laser sources are needed, as the 780 nm light can be created by second harmonic generation of the 1560 nm laser.

It will be appreciated that the choice of the number of lasers used will depend on the availability, efficiency, price, lifetime and physical volume of each technology. It should be noted that it is possible to use a single laser (for example at 3144 nm), which via frequency doubling would give 1572 nm and its third harmonic would give 1048 nm.

Thus a third example combination using a single starting laser at 3144 nm is:

| 1048 nm | + | 1572 nm | = | 628.8 nm (red) |
|---------|---|---------|---|----------------|
| 1048 nm | + | 1048 nm | = | 524 nm (green) |
| 1048 nm | + | 786 nm | = | 449.1 nm (blue). |

Another specific example would be:

| 950 nm | + | 1800 nm | = | 621 nm (red) |
|--------|---|---------|---|--------------|
| 950 nm | + | 1210 nm | = | 532 nm (green) |
| 950 nm | + | 880 nm | = | 456 nm (blue). |

Where the 950 nm beam could be generated by an OLED array (or other infrared light emitting diode array) and the other three beams at 1800, 1210 and 880 nm by respective laser sources. In this example, there are four different wavelengths.

A general desirable feature of the present invention is apparent from the above examples. Namely, since the colours for the display are inherently in the visible range, the input beams will be in the infrared and hence invisible for most if not all practical combinations of two wavelengths. The scatter problem with conventional microprojector displays is therefore inherently solved, since any scattered light from the source beams will be in the infrared and so cannot be seen.

The conversion efficiency in a nonlinear process depends on the products of the input beam intensities. For this reason, although CW sources could be used, it is preferable that the sources are operated in pulsed mode to produce high peak power and thus greater conversion efficiencies. Laser sources for generating the input beams may be operated in any of the following modes: CW, long-pulsed, nanosecond pulsed, picosecond pulsed or femtosecond pulsed. The choice of which sources to use and in which modes of operation will depend on various factors including the nonlinearity of the NLO material, the damage thresholds of the NLO material, the required drive electrical power, form factor, weight, cost, lifetime, etc.

Moreover, it will be understood that any particular beam source that is used will generate a beam with a certain frequency response that is typically defined in terms of a single frequency (or wavelength) - the peak frequency - and a bandwidth - as a measure of the spread of the emission above and below the peak frequency. To the extent that it is relevant in this document, we define the bandwidth of a beam source to be the full width at half maximum (FWHM). When a laser is used as the beam source, the bandwidth will be very narrow, whereas when a non-laser source is used as the beam source the bandwidth may be appreciable. Considering the visible and near infrared wavelengths discussed in the examples above, typical bandwidths are as follows. In a single-mode edge-emitting LD, the bandwidth may be as high as a few nanometres reducing to sub-pm for distributed feedback (DFB) or distributed Bragg reflector (DBR) edge-emitting LDs. For non-laser sources, the bandwidths will generally be higher. For example, an OLED may have a bandwidth of a few tens of nanometres. In this document, we usually refer to 'the frequency' of a beam source - meaning the peak frequency - and do not mention the bandwidth unless relevant.

## OTHER POINTS AND VARIANTS

Although SFG by nonlinear wave mixing is typically associated with the need to use input beams with quite high power (e.g. mW to Watt level laser powers), such high power input beams will not generally be needed for embodiments of the present invention because of the human eye's high sensitivity. For the human eye, optical powers at the sub-microwatt level are quite bright, so the maximum output powers of the beam sources needed by close-to-eye embodiments of the invention, such as AR spectacles or VR headsets, will remain quite modest.

Many of the conventional approaches to the optical design known from existing AR and VR display apparatus can also be used in display apparatus embodying the present invention. For example, it is well known to use a relay lens between a modulated light source (e.g. a micro-OLED emitter array) and the AR display panel to transfer the light to an emitting point on the display panel where it effectively becomes an angular spectrum. This concept is familiar in terms of Fourier optics, for example in a 4f imaging system, with a simple lens placed one focal length from the emitting screen, and set such that the position the plane wave are reflected from is also one focal length away. In the simplest case, and assuming that the focal length of the lens matches the focal length of the eye (e.g. about 16 mm), a symmetric 4f imaging system is provided. The display panel is effectively located at the intermediate or Fourier plane and will thus contain the angular information. Modifications are possible in which the relay lens has a different focal length compared to the eye. Moreover, the relay lens may also be modified in a more sophisticated way, e.g. to compensate for undesired optical distortion, such as to correct chromatic and other aberrations, or to provide other effects, such as to provide different magnifications. In designing the relay lens, it should be noted that the noncollinear geometry causes the spatial distribution of image information in the product beam to be stretched compared with the corresponding image information in the first and optionally second input beams which needs to be taken account of. One simple approach is to use the Scheimpflug principle in which the lens is tilted so as to image to planes at an angle. More complex optical lenses and lens combinations can be deployed to correct for distortions and aberrations as are already commonplace in optical design theory. There are also effects due to the curvature of the display panel, and this can be corrected through a combination of determining the local angle of the QPM grating direction, and also through the selection of image information.

If an AR display apparatus is convincing, then a person wearing AR spectacles can have any image placed anywhere within their visual field. For example, if the wearer looks at their wrist to see a wristwatch, they don't actually need a watch face to be present. Rather, the watch face can be superimposed onto the watch face. Similarly, a mobile phone no longer requires a display, it can instead have an arbitrary display area on which the AR display superimposes what is on the display. The same approach can be taken for a television or personal computer, which no longer needs a screen, merely a designated area on the wall or the device for the wearer of the AR display to perceive the display to be. A keyboard can be projected too.

It will be realised that any of the approaches disclosed herein in the context of AR will also be applicable to VR (simply by blocking all natural scene light).

It is noted that when we refer to SFG of two input beams we include frequency doubling, i.e. second harmonic generation (SHG), SHG being a special case of SFG in which both input beams are of equal wavelength.

While certain features and advantages of the proposed design are specific to AR vision systems, the proposed design is also advantageous for VR vision systems, in particular VR goggles could be made with much smaller depth as a result of being able to engineer the wavefront curvature of the VR images. The ability to place different synthetic objects at different perceived depths is just as advantageous in the context of a virtual image formed in VR goggles as for AR spectacles in that it makes the VR image more convincing and also allows vergence-accommodation conflict to be avoided.

Moreover, the disclosure of this document can also be deployed to provide imaging solutions for other optically viewed systems where the eye is in close proximity to where image formation occurs, including but not limited to binoculars, monoculars, telescopes, camera viewfinders, cinema camera viewfinders, microscope eye pieces, medical imaging devices, endoscopes, magnifying elements, rifle scopes and military targeting systems.

**REFERENCE NUMERALS**

| | |
|---|---|
| 10 | headset (e.g. AR spectacles) |
| 11 | information defining artificial scene |
| 12 | display apparatus |
| 13 | controller system |
| 14 | beam source |
| 16 | emitter array (as beam source) |
| 18 | laser (as beam source) |
| 19 | laser control unit |

| | |
|---|---|
| 20 | spectacle lens |
| 22 | spectacle lens, left eye |
| 24 | spectacle lens, right eye |
| 26 | spectacle frame |
| 28 | spectacle frame, bridge |
| 30 | spectacle frame, nose pad |
| 32 | spectacle arm, left (temple) |
| 34 | spectacle arm, right (temple) |
| 36 | spectacle lens rim, left |
| 38 | spectacle lens rim, right |

| | |
|---|---|
| 40 | headset wireless transmitter/transceiver |
| 42 | communication path to external control device |
| 43 | external wireless transmitter/transceiver |
| 44 | external control device |
| 46 | external control device, processor |
| 48 | external control device, memory |
| 49 | comms interface to external networks (WiFi, Bluetooth, etc). |
| 50 | outwardly facing camera, left-side (for natural scene acquisition) |
| 52 | outwardly facing camera, right-side (for natural scene acquisition) |
| 54 | inwardly facing camera, left-side (for eye tracking) |
| 56 | inwardly facing camera, right-side (for eye tracking) |
| 58 | range finder for natural scene objects (e.g. LiDAR device) |
| 60 | photodetectors (for detecting input light leakage) |
| 62 | compass, frame or arm mounted |
| 64 | accelerometers, frame or arm mounted |

| | |
|---|---|
| 70 | first input beam / beam path (of a pair) |
| 71 | angle scanning of first beam |
| 72 | first input beam wavevector |
| 74 | first input beam wavefront |
| 75 | amplitude and phase modulation function on beam |

| | |
|---|---|
| 76 | second input beam / beam path (of a pair) |
| 77 | angle scanning of second beam |
| 78 | second input beam wavevector |
| 80 | second input beam wavefront |
| 81 | Gaussian beam profile |

| | |
|---|---|
| 82 | product beam (from one pair of input beams) |
| 84 | product beam wavefront |
| 86 | product beam wavevector |
| 88 | display panel |

| 90 | display panel, front face (proximal) |
| 92 | display panel, back face (distal) |
| 94 | display panel, left end face |
| 96 | display panel, right end face |

| 100 | NLO material layer |
| 103 | NLO material superstructure spot |
| 104 | NLO material spot cluster |
| 106 | NLO material cluster spots R, G & B (106R, 106G and 106B respectively) |
| 108 | QPM grating / spatially modulated region |
| 110 | intersection region of beams within the NLO material layer |

| 120 | amplitude modulator |
| 121 | amplitude modulator controller |
| 122 | phase modulator |
| 123 | phase modulator controller |
| 123a | combined amplitude and phase modulator |
| 124b | controller for combined amplitude and phase modulator |

| 124 | input beam routing components |
| 125 | rotatable mirror elements |
| 128 | air surrounding an element |
| 130 | front filter layer |
| 132 | back filter layer |
| 134 | light blocking layer |
| 136 | mirror layer, front |
| 138 | mirror layer, back |
| 139 | electrical control element for electrochromic layer |
| 140 | photochromic / electrochromic layer (for dimming in bright light) |
| 141 | electrical connection |
| 142 | vision correction lens layer, front |
| 144 | vision correction lens layer, back |
| 146 | antireflection coating (ARC) layer, front |
| 148 | antireflection coating (ARC) layer, back |
| 150 | spacing layer, front |
| 152 | spacing layer, back |
| 154 | dimming layer (e.g. photochromic, electrochromic) |
| 156 | dimming layer, electrical connection line |

| 160 | eye |
| 162 | eyeball |
| 164 | cornea |
| 166 | eye lens |
| 168 | retina |
| 170 | pupil |
| 172 | iris |
| 174 | optic nerve |

| 180 | object in natural scene (stick man) |
| 181 | wavefront from the natural scene |
| 182 | light scattered from object |
| 184 | rays of light |
| 186 | discontinuity of scale |
| 188 | scattered wavefront |
| 190 | inset of scattered wavefront |
| 192 | distance |
| 188A | wavefront from point A |
| 188B | wavefront from point B |

| 190 | focal point |
|---|---|
| 190A | focal point for light from point A |
| 190B | focal point for light from point B |
| 200 | a QPM structure in a NLO material |
| 202 | 'up' domain in a NLO material |
| 204 | 'down' domain in a NLO material |
| 206x | QPM period (206R for red, 206G for green, 206B for blue) |
| 208 | A superstructured QPM period |

| 220 | input single beam |
|---|---|
| 222x | mirror (222A is first mirror, 222B is second mirror, 222C is third mirror) |
| 224x | output beam path (224A is first output beam path, 224B is second output beam path, 224C is third output beam path) |
| 240x | lens (240A is first lens, 240B is second lens) |
| 241 | controller for a lens or lenses |
| 242 | relay lens |

| 260 | reflective structure |
|---|---|
| 262 | internal mirror layer within display |
| 264 | spectacle arm / temple side of display element |
| 266 | nose / bridge side of the display element |

| 280 | control system for eye tracking |
|---|---|
| 282 | blanking period |

| 290 | region on outside of lens containing absorber |
|---|---|
| 292 | entry region for optical beams |

| 300 | lens for VR |
|---|---|

| 317 | input laser wave |
|---|---|
| 318, 319, 320 | example radii of curvature of input laser wave |
| 321 | incoherent emitter array (e.g. microLED array) |
| 322, 323, 334 | example pixels of incoherent emitter array |
| 324 | controller for incoherent emitter array |
| 325 | lens |

| 400 | controller (including processor) |
|---|---|
| 402 | inputs for controller |
| 404 | outputs for controller |

**Claims**

1. A display apparatus (12) for displaying synthetic scene images responsive to input of image information, the display apparatus comprising:

   a first beam source (16) for providing a first input beam (70) of a first frequency and bandwidth;
   a second beam source (18) for providing a second input beam (76) of a second frequency and bandwidth;
   a display panel (88) containing nonlinear optical, NLO, material (100) that is phase matched to the first and second input beams and to a product beam (82) of a sum frequency that is equal to the sum of the first and second frequencies;
   input beam routing components (222, 240) arranged to introduce the first and second input beams into the display panel so that they traverse the display panel in first and second paths that cross each other in the NLO material in a noncollinear geometry to define an intersection volume (110) where the product beam is generated by sum frequency generation; and
   a controller (400) operable responsive to the input of the image information to form the synthetic scene images by amplitude modulating at least one of the first and second input beams and by phase modulating at least one of the first and second input beams to set each of amplitude, wavevector and wavefront radius of curvature of the product beam.

2. The display apparatus of claim 1, wherein the first input beam encodes image intensity information that defines the intensity of the product beam generated at each intersection volume of a given synthetic scene image and the second input beam encodes image depth information that defines the wavefront radius of curvature in the product beam generated at all intersection volumes for a given synthetic scene image.

3. The display apparatus of claim 1 or 2, wherein the controller is operable to group the synthetic scene images into image frames, the different synthetic scene images of a given image frame having different wavefront radii of curvature to represent image elements that lie at different respective perceived distances.

4. The display apparatus of claim 1 or 2, wherein the display apparatus is for displaying a synthetic scene image in colour and comprises a plurality of beam sources which includes the first and second input beam sources, wherein the first and second input beams form one of three input beam pairs generated by the plurality of beam sources, the first to third input beam pairs combining to generate first to third product beams with first to third sum frequencies which provide first to third primary colours.

5. The display apparatus of claim 4, wherein the plurality of beam sources to form the three input beam pairs comprises an emitter array and first to third lasers, wherein the emitter array provides one of the input beams for all three input beam pairs, the other input beam of each pair being provided by one of the first to third lasers, the first to third primary colours being provided by time slicing so that the first to third product beams are generated sequentially.

6. The display apparatus of claim 4 or 5, wherein the controller is operable to group the synthetic scene images into image frames, the different synthetic scene images of a given image frame being in each of the first to third primary colours and having different wavefront radii of curvature, thereby to represent colour image elements that lie at different respective perceived distances.

7. The display apparatus of any preceding claim, wherein the input beam routing components are adjustable to provide for variation of at least one of the first and second paths to vary the angle at which the first and second input beams cross in the NLO material and thereby vary the wavevector direction of the product beam.

8. The display apparatus of any preceding claim, wherein the input beam routing components are adjustable to provide for variation of at least one of the first and second paths to vary the location where the first and second paths cross in the NLO material.

9. The display apparatus of any preceding claim, further comprising:

an amplitude modulator (120) arranged to amplitude modulate the first input beam and a phase modulator (122) arranged to phase modulate the second input beam; or
a combined amplitude and phase modulator (123a) to amplitude and phase modulate one of the first and second input beams.

10. The display apparatus of any preceding claim, wherein the NLO material is:

spatially modulated in respect of its second order nonlinearity to provide phase matching through quasi-phase matching; or
homogeneous in respect of its second order nonlinearity to provide phase matching through birefringent phase matching.

11. The display apparatus of any preceding claim, wherein the NLO material is contained in the display panel in a NLO material layer, and wherein the display panel comprises a front filter layer (130) arranged in front of the NLO material layer, the front filter layer being opaque to the first and second frequencies and transparent to the sum frequency, to block emission of light from the first and second input beams out of the display panel in an outward direction.

12. The display apparatus of any preceding claim, wherein the NLO material is contained in the display panel in a NLO material layer, and wherein the display panel comprises a back filter layer (132) arranged to the back of the NLO material layer, the back filter layer being opaque to the first and second frequencies, to block emission of light from the first and second input beams out of the display panel in an inward direction, and optionally also transparent to visible frequencies.

13. The display apparatus of any preceding claim, wherein the display panel comprises a light blocking layer (134) comprising an array of pixels which are individually addressable by electric control lines in order to switch the pixels between a first state which is opaque to visible frequencies and a second state which is transmissive to visible frequencies, so that natural scene light can be blended out of selected areas of the light blocking layer.

14. The display apparatus of any preceding claim, wherein the first and second paths traverse the display panel by successive reflections, and wherein optionally the successive reflections are: either from front and back surfaces of the display panel by total internal reflection; or from front and back mirror layers (136, 138) arranged in the display panel that are respectively disposed to the front and back of the NLO material and that are reflective at the frequencies of the input beams and transmissive across visible frequencies.

15. A wearable headset (10) incorporating the display apparatus of any preceding claim, such that the display panel is arranged in front of a wearer's eyes at a vertex distance of less than 30 mm for close-to-eye image formation.


**Patentansprüche**

1. Anzeigevorrichtung (12) zum Anzeigen synthetischer Szenenbilder als Reaktion auf die Eingabe von Bildinformationen, wobei die Anzeigevorrichtung umfasst:

    eine erste Strahlquelle (16) zum Bereitstellen eines ersten Eingangsstrahls (70) mit einer ersten Frequenz und Bandbreite;
    eine zweite Strahlquelle (18) zum Bereitstellen eines zweiten Eingangsstrahls (76) mit einer zweiten Frequenz und Bandbreite;
    ein Anzeigepanel (88), das nichtlineares optisches, NLO, Material (100) enthält, das phasenangepasst an den ersten und zweiten Eingangsstrahl und an einen Produktstrahl (82) einer Summenfrequenz ist, die der Summe der ersten und zweiten Frequenz entspricht;
    Eingangsstrahl-Leitkomponenten (222, 240), die so angeordnet sind, dass sie den ersten und zweiten Eingangsstrahl in das Anzeigefeld einleiten, sodass sie das Anzeigefeld in einem ersten und zweiten Pfad durchlaufen, die sich im NLO-Material in einer nicht kollinearen Geometrie kreuzen, um ein Schnittvolumen (110) zu definieren, in dem der Produktstrahl durch Summenfrequenzerzeugung erzeugt wird; und
    eine Steuereinrichtung (400), die auf die Eingabe der Bildinformationen reagiert, um die synthetischen Szenenbilder zu erzeugen, indem mindestens einer der ersten und zweiten Eingangsstrahlen amplitudenmoduliert und mindestens einer der ersten und zweiten Eingangsstrahlen phasenmoduliert wird, um die Amplitude, den Wellenvektor und den Wellenfrontkrümmungsradius des Produktstrahls einzustellen.

2. Die Anzeigevorrichtung nach Anspruch 1, wobei der erste Eingangsstrahl Bildintensitätsinformationen codiert, die die Intensität des an jedem Schnittvolumen eines gegebenen synthetischen Szenenbildes erzeugten Produktstrahls definieren, und der zweite Eingangsstrahl Bildtiefeninformationen codiert, die den Wellenfrontkrümmungsradius in dem an allen Schnittvolumina für ein gegebenes synthetisches Szenenbild erzeugten Produktstrahl definieren.

3. Die Anzeigevorrichtung nach Anspruch 1 oder 2, wobei die Steuereinheit so betrieben werden kann, dass sie die synthetischen Szenenbilder in Bildrahmen gruppiert, wobei die verschiedenen synthetischen Szenenbilder eines gegebenen Bildrahmens unterschiedliche Wellenfrontkrümmungsradien aufweisen, um Bildelemente darzustellen, die in unterschiedlichen jeweiligen wahrgenommenen Entfernungen liegen.

4. Die Anzeigevorrichtung nach Anspruch 1 oder 2, wobei die Anzeigevorrichtung zum Anzeigen eines synthetischen Szenenbildes in Farbe dient und eine Vielzahl von Strahlquellen umfasst, die die erste und zweite Eingangsstrahlquelle enthalten, wobei der erste und zweite Eingangsstrahl eines von drei Eingangsstrahlpaaren bilden, die von der Vielzahl von Strahlquellen erzeugt werden, wobei das erste bis dritte Eingangsstrahlpaar kombiniert wird, um einen ersten bis dritten Produktstrahl mit einer ersten bis dritten Summenfrequenz zu erzeugen, die eine erste bis dritte Primärfarbe bereitstellen.

5. Die Anzeigevorrichtung nach Anspruch 4, wobei die Vielzahl von Strahlquellen zum Bilden der drei Eingangsstrahlpaare eine Emitteranordnung und einen ersten bis dritten Laser umfasst, wobei die Emitteranordnung einen der Eingangsstrahlen für alle drei Eingangsstrahlpaare bereitstellt, wobei der andere Eingangsstrahl jedes Paares von einem der ersten bis dritten Laser bereitgestellt wird, wobei die ersten bis dritten Primärfarben durch Zeitscheibenbildung bereitgestellt werden, so dass die ersten bis dritten Produktstrahlen sequenziell erzeugt werden.

6. Die Anzeigevorrichtung nach Anspruch 4 oder 5, wobei die Steuereinheit so betrieben werden kann, dass sie die synthetischen Szenenbilder zu Bildrahmen gruppiert, wobei die verschiedenen synthetischen Szenenbilder eines bestimmten Bildrahmens in jeder der ersten bis dritten Primärfarben vorliegen und unterschiedliche Wellenfrontkrümmungsradien aufweisen, um dadurch Farbbildelemente darzustellen, die in unterschiedlichen jeweiligen wahrgenommenen Entfernungen liegen.

7. Die Anzeigevorrichtung nach einem der vorstehenden Ansprüche, wobei die Eingangsstrahl-Leitkomponenten einstellbar sind, um eine Variation mindestens eines der ersten und zweiten Pfade zu ermöglichen, um den Winkel zu variieren, in dem sich der erste und zweite Eingangsstrahl im NLO-Material kreuzen, und dadurch die Wellenvektorrichtung des Produktstrahls zu variieren.

8. Die Anzeigevorrichtung nach einem der vorstehenden Ansprüche, wobei die Eingangsstrahl-Leitkomponenten einstellbar sind, um eine Variation mindestens eines der ersten und zweiten Pfade zu ermöglichen, um die Stelle zu variieren, an der sich der erste und zweite Pfad im NLO-Material kreuzen.

9. Die Anzeigevorrichtung nach einem der vorstehenden Ansprüche, die ferner umfasst:

einen Amplitudenmodulator (120), der so angeordnet ist, dass er den ersten Eingangsstrahl amplitudenmoduliert, und einen Phasenmodulator (122), der so angeordnet ist, dass er den zweiten Eingangsstrahl phasenmoduliert; oder
einen kombinierten Amplituden- und Phasenmodulator (123a) zum Amplituden- und Phasenmodulieren eines der ersten und zweiten Eingangsstrahlen.

10. Die Anzeigevorrichtung nach einem der vorstehenden Ansprüche, wobei das NLO-Material

in Bezug auf seine Nichtlinearität zweiter Ordnung räumlich moduliert ist, um eine Phasenanpassung durch Quasi-Phasenanpassung zu erzielen; oder
in Bezug auf seine Nichtlinearität zweiter Ordnung homogen ist, um eine Phasenanpassung durch doppelbrechende Phasenanpassung zu erzielen.

11. Die Anzeigevorrichtung nach einem der vorstehenden Ansprüche, wobei das NLO-Material in einer NLO-Materialschicht in der Anzeigeplatte enthalten ist und wobei die Anzeigeplatte eine vordere Filterschicht (130) umfasst, die vor der NLO-Materialschicht angeordnet ist, wobei die vordere Filterschicht für die erste und zweite Frequenz undurchlässig und für die Summenfrequenz durchlässig ist, um die Emission von Licht aus dem ersten und zweiten Eingangsstrahl aus der Anzeigeplatte in einer nach außen gerichteten Richtung zu blockieren.

12. Die Anzeigevorrichtung nach einem der vorstehenden Ansprüche, wobei das NLO-Material in einer NLO-Materialschicht im Anzeigefeld enthalten ist und wobei das Anzeigefeld eine hintere Filterschicht (132) umfasst, die hinter der NLO-Materialschicht angeordnet ist, wobei die hintere Filterschicht für die erste und zweite Frequenz undurchlässig ist, um die Emission von Licht aus dem ersten und zweiten Eingangsstrahl aus dem Anzeigefeld in einer nach innen gerichteten Richtung zu blockieren, und optional auch für sichtbare Frequenzen transparent ist.

13. Die Anzeigevorrichtung nach einem der vorstehenden Ansprüche, wobei das Anzeigefeld eine Lichtblockierschicht (134) umfasst, die eine Anordnung von Pixeln umfasst, die einzeln durch elektrische Steuerleitungen adressierbar sind, um die Pixel zwischen einem ersten Zustand, der für sichtbare Frequenzen undurchlässig ist, und einem zweiten Zustand, der für sichtbare Frequenzen durchlässig ist, umzuschalten, so dass natürliches Szenenlicht aus ausgewählten Bereichen der Lichtblockierschicht herausgeblendet werden kann.

14. Die Anzeigevorrichtung nach einem der vorstehenden Ansprüche, wobei der erste und der zweite Weg das Anzeigefeld durch aufeinanderfolgende Reflexionen durchlaufen und wobei die aufeinanderfolgenden Reflexionen optional entweder von der Vorder- und Rückseite des Anzeigefeldes durch Totalreflexion oder von vorderen und hinteren Spiegelschichten (136, 138), die in dem Anzeigepanel angeordnet sind, jeweils vor und hinter dem NLO-Material liegen und bei den Frequenzen der Eingangsstrahlen reflektierend und bei sichtbaren Frequenzen durchlässig sind.

**15.** Ein tragbares Headset (10), das die Anzeigeeinrichtung eines beliebigen vorhergehenden Anspruchs umfasst, wobei das Anzeigefeld vor den Augen eines Trägers in einem Scheitelabstand von weniger als 30 mm angeordnet ist, um eine augennahen Bildgebung zu ermöglichen.

**Revendications**

**1.** Dispositif d'affichage (12) destiné à afficher des images de scènes synthétiques en réponse à l'entrée d'informations d'image, le dispositif d'affichage comprenant :

une première source de faisceau (16) pour fournir un premier faisceau d'entrée (70) d'une première fréquence et d'une première bande passante ;
une deuxième source de faisceau (18) pour fournir un deuxième faisceau d'entrée (76) d'une deuxième fréquence et d'une deuxième bande passante ;
un panneau d'affichage (88) contenant un matériau optique non linéaire, NLO, (100) qui est adapté en phase aux premier et deuxième faisceaux d'entrée et à un faisceau produit (82) d'une fréquence somme qui est égale à la somme des première et deuxième fréquences ;
des composants de routage de faisceau d'entrée (222, 240) agencés pour introduire les premier et deuxième faisceaux d'entrée dans le panneau d'affichage de manière à ce qu'ils traversent le panneau d'affichage selon des premier et deuxième chemins qui se croisent dans le matériau NLO selon une géométrie non colinéaire afin de définir un volume d'intersection (110) où le faisceau produit est généré par génération de fréquence somme ; et
un contrôleur (400) pouvant fonctionner en réponse à l'entrée des informations d'image pour former les images de scène synthétiques en modulant en amplitude au moins l'un des premier et deuxième faisceaux d'entrée et en modulant en phase au moins l'un des premier et deuxième faisceaux d'entrée pour définir chacune des amplitudes, des vecteurs d'onde et des rayons de courbure du front d'onde du faisceau produit.

**2.** L'appareil d'affichage selon la revendication 1, dans lequel le premier faisceau d'entrée code des informations d'intensité d'image qui définissent l'intensité du faisceau produit généré à chaque volume d'intersection d'une image de scène synthétique donnée et le deuxième faisceau d'entrée code des informations de profondeur d'image qui définissent le rayon de courbure du front d'onde dans le faisceau produit généré à tous les volumes d'intersection pour une image de scène synthétique donnée.

**3.** L'appareil d'affichage selon la revendication 1 ou 2, dans lequel le contrôleur est opérationnel pour regrouper les images de scène synthétiques en trames d'image, les différentes images de scène synthétiques d'une trame d'image donnée ayant différents rayons de courbure du front d'onde pour représenter des éléments d'image qui se trouvent à différentes distances perçues respectives.

**4.** L'appareil d'affichage selon la revendication 1 ou 2, dans lequel l'appareil d'affichage est destiné à afficher une image de scène synthétique en couleur et comprend une pluralité de sources de faisceaux qui comprennent les première et deuxième sources de faisceaux d'entrée, dans lequel les premier et deuxième faisceaux d'entrée forment l'une des trois paires de faisceaux d'entrée générées par la pluralité de sources de faisceaux, les première à troisième paires de faisceaux d'entrée se combinant pour générer des premier à troisième faisceaux produits avec des première à troisième fréquences de somme qui fournissent des première à troisième couleurs primaires.

**5.** Dispositif d'affichage selon la revendication 4, dans lequel la pluralité de sources de faisceaux pour former les trois paires de faisceaux d'entrée comprend un réseau d'émetteurs et des premier à troisième lasers, dans lequel le réseau d'émetteurs fournit l'un des faisceaux d'entrée pour les trois paires de faisceaux d'entrée, l'autre faisceau d'entrée de chaque paire étant fourni par l'un des premier à troisième lasers, les première à troisième couleurs primaires étant fournies par découpage temporel de sorte que les premier à troisième faisceaux produits sont générés séquentiellement.

**6.** Dispositif d'affichage selon la revendication 4 ou 5, dans lequel le contrôleur est apte à regrouper les images de scène synthétiques en trames d'images, les différentes images de scène synthétiques d'une trame d'image donnée étant dans chacune des première à troisième couleurs primaires et ayant des rayons de courbure de front d'onde différents, afin de représenter des éléments d'image couleur qui se trouvent à des distances perçues respectives différentes.

**7.** L'appareil d'affichage de l'une quelconque des revendications précédentes, dans lequel les composants de routage du faisceau d'entrée sont réglables pour permettre la variation d'au moins l'un des premier et deuxième chemins afin de faire varier l'angle auquel les premier et deuxième faisceaux d'entrée se croisent dans le matériau NLO et ainsi faire varier la direction du vecteur d'onde du faisceau produit.

8. Dispositif d'affichage selon l'une quelconque des revendications précédentes, dans lequel les composants de routage du faisceau d'entrée sont réglables pour permettre la variation d'au moins l'un des premier et deuxième chemins afin de faire varier l'emplacement où les premier et deuxième chemins se croisent dans le matériau NLO.

9. L'appareil d'affichage de l'une quelconque des revendications précédentes, comprenant en outre :

   un modulateur d'amplitude (120) agencé pour moduler en amplitude le premier faisceau d'entrée et un modulateur de phase (122) agencé pour moduler en phase le deuxième faisceau d'entrée ; ou
   un modulateur d'amplitude et de phase combiné (123a) pour moduler en amplitude et en phase l'un des premier et deuxième faisceaux d'entrée.

10. L'appareil d'affichage de l'une quelconque des revendications précédentes, dans lequel le matériau NLO est :

   modulé spatialement en ce qui concerne sa non-linéarité du second ordre afin de fournir une adaptation de phase par quasi-adaptation de phase ; ou
   homogène en ce qui concerne sa non-linéarité du second ordre afin d'assurer l'adaptation de phase par adaptation de phase biréfringente.

11. Dispositif d'affichage selon l'une quelconque des revendications précédentes, dans lequel le matériau NLO est contenu dans le panneau d'affichage dans une couche de matériau NLO, et dans lequel le panneau d'affichage comprend une couche de filtre avant (130) disposée devant la couche de matériau NLO, la couche de filtre avant étant opaque aux première et deuxième fréquences et transparente à la fréquence somme, afin de bloquer l'émission de lumière provenant des premier et deuxième faisceaux d'entrée hors du panneau d'affichage dans une direction vers l'extérieur.

12. Dispositif d'affichage selon l'une quelconque des revendications précédentes, dans lequel le matériau NLO est contenu dans le panneau d'affichage dans une couche de matériau NLO, et dans lequel le panneau d'affichage comprend une couche de filtre arrière (132) disposée à l'arrière de la couche de matériau NLO, la couche de filtre arrière étant opaque aux première et deuxième fréquences, afin de bloquer l'émission de lumière provenant des premier et deuxième faisceaux d'entrée hors du panneau d'affichage dans une direction vers l'intérieur, et éventuellement également transparente aux fréquences visibles.

13. Dispositif d'affichage selon l'une quelconque des revendications précédentes, dans lequel le panneau d'affichage comprend une couche bloquant la lumière (134) comprenant un réseau de pixels qui sont adressables individuellement par des lignes de commande électriques afin de commuter les pixels entre un premier état qui est opaque aux fréquences visibles et un second état qui est transmissif aux fréquences visibles, de sorte que la lumière naturelle de la scène peut être mélangée à partir de zones sélectionnées de la couche bloquant la lumière.

14. Dispositif d'affichage selon l'une quelconque des revendications précédentes, dans lequel les premier et deuxième chemins traversent le panneau d'affichage par des réflexions successives, et dans lequel, en option, les réflexions successives sont : soit à partir des surfaces avant et arrière du panneau d'affichage par réflexion interne totale ; soit à partir des couches miroir avant et arrière (136, 138) disposées dans le panneau d'affichage, qui sont respectivement disposées à l'avant et à l'arrière du matériau NLO et qui sont réfléchissantes aux fréquences des faisceaux d'entrée et transmissives aux fréquences visibles.

15. Casque portable (10) incorporant le dispositif d'affichage de l'une quelconque des revendications précédentes, de telle sorte que le panneau d'affichage est disposé devant les yeux d'un utilisateur à une distance vertex inférieure à 30 mm pour la formation d'une image proche de l'œil.

FIG. 1

FIG. 2

FIG. 3

FIG. 4

FIG. 5

$$\underline{a}_1 = a(1,0)$$

$$\underline{a}_2 = a\left(-\frac{1}{2},\frac{\sqrt{3}}{2}\right)$$

$$\underline{b}_1 = \frac{2\pi}{a}\left(1,\frac{1}{\sqrt{3}}\right)$$

$$\underline{b}_2 = \frac{4\pi}{a\sqrt{3}}(0,1)$$

FIG. 6

FIG. 7

FIG. 8

FIG. 9

FIG. 10

FIG. 11

FIG. 12a

FIG. 12b

FIG. 13

FIG. 14

FIG. 15

128

88 {

142    $AR_1$ —146

$N_1$

150A    $A_1$ —130

$N_2$

150B    $R_1$ —136

$N_3$

150C    NLO —100

$N_4$

150D    $R_2$ —138

$N_5$

144    $A_2$ —132

$N_6$

   $AR_2$ —148

128

FIG. 16

FIG. 17

88A

88B

88C

FIG. 18

FIG. 19

FIG. 20

FIG. 21

FIG. 22

FIG. 23

FIG. 24

COLOUR | R | G | B | R | G | B | R | G | B | R | G | B | R

ROC | 0.25 | 0.25 | 0.25 | 0.5 | 0.5 | 0.5 | 0.1 | 0.1 | 0.1 | 0.2 | 0.2 | 0.2 | 0.4

t

FIG. 25

FIG. 26

FIG. 27

FIG. 28

FIG. 29

FIG. 30

FIG. 31

FIG. 32

FIG. 33a

EP 4 540 646 B1

FIG. 33b

INPUTS

54 & 56      11      50 & 52

inward camera    artificial scene    outward camera

System Controller  ~13

laser power

19

OLED controller    Phase controller    Rotatable mirrors

324      123      222

OUTPUTS

FIG. 34

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007291810 A1

**Non-patent literature cited in the description**

- **ZHAN** ; **YIN** ; **XIONG** ; **HE** ; **WU**. Augmented Reality and Virtual Reality Displays: Perspectives and Challenges. *Perspective*, 2020, vol. 23 (8), 101397, https://doi.org/10.1016/j.isci.2020.101397